# EUROPEAN PATENT APPLICATION

(11) **EP 1 770 937 A2**
(43) Date of publication of application: **04.04.2007**
(21) Application number: 06011767.8
(22) Date of filing: 07.06.2006
(51) Int. Cl.: H04L 27/26

(54) **OFDM radio reconfigurable to support different standards**

(30) Priority: 28.09.2005 US 237045
(71) Applicant: Broadcom Corporation, Irvine, CA 92618-7013 (US)
(72) Inventor: Van Rooyen, Pieter, 92130 San Diego (US)
(74) Representative: Jehle, Volker Armin

(57) **Abstract**

Aspects of a method and system for a reconfigurable OFDM radio supporting diversity are presented. Aspects of the method may include reconfiguring a single OFDM chip to process DVB-H video broadcast signals and IEEE 802.11 WLAN signals, IEEE 802.16 MAN signals and/or cellular signals. Aspects of the system may include a single OFDM chip including circuitry that is reconfigurable to process DVB-H video broadcast signals and IEEE 802.11 WLAN signals, IEEE 802.16 MAN signals and/or cellular signals. A machine readable storage may include a computer program, having at least one code section that may be executable by a machine, that causes the machine to perform steps for reconfiguring a single OFDM chip supporting diversity as described above.

## Description

### CROSS-REFERENCE TO RELATED APPLICATIONS/INCORPORATION BY REFERENCE

This application makes reference to:
United States Patent Application Serial No. (Attorney Docket No. 16847US01), filed September 28, 2005; and
United States Patent Application Serial No. (Attorney Docket No. 16849US01), filed September 28, 2005.

All of the above stated applications are hereby incorporated herein by reference in their entirety.

### FIELD OF THE INVENTION

Certain embodiments of the invention relate to communication of information via a plurality of different networks. More specifically, certain embodiments of the invention relate to a method and system for a reconfigurable orthogonal frequency division multiplexing (OFDM) radio supporting diversity.

### BACKGROUND OF THE INVENTION

Mobile communications has changed the way people communicate and mobile phones have been transformed from a luxury item to an essential part of every day life. The use of mobile devices is today dictated by social situations, rather than hampered by location or technology. While voice connections fulfill the basic need to communicate, and mobile voice connections continue to filter even further into the fabric of every day life, the mobile Internet is the next step in the mobile communication revolution. The mobile Internet and/or mobile video are poised to become a common source of everyday information, and easy, versatile mobile access to this data will be taken for granted.

Third generation (3G) cellular networks, for example, have been specifically designed to fulfill these future demands of the mobile devices. As these services grow in popularity and usage, factors such as cost efficient optimization of network capacity and quality of service (QoS) will become even more essential to cellular operators than it is today. These factors may be achieved with careful network planning and operation, improvements in transmission methods, and advances in receiver techniques. To this end, carriers need technologies that will allow them to increase downlink throughput and, in turn, offer advanced QoS capabilities and speeds that rival those delivered by cable modem and/or DSL service providers. In this regard, networks based on wideband CDMA (WCDMA) technology may make the delivery of data to end users a more feasible option for today's wireless carriers. The GPRS and EDGE technologies may be utilized for enhancing the data throughput of present second generation (2G) systems such as GSM. Moreover, HSDPA technology is an Internet protocol (IP) based service, oriented for data communications, which adapts WCDMA to support data transfer rates on the order of 10 megabits per second (Mbits/s).

In addition to cellular technologies, technologies such as those developed under the IEEE 802.11 and 802.16 standards, and/or the digital video broadcasting (DVB) standard, may also be utilized to fulfill these future demands of the mobile devices. For example, wireless local area networks (WLAN), wireless metropolitan area networks (WMAN), and DVB networks may be adapted to support mobile Internet an/or mobile video applications, for example. The digital video broadcasting (DVB) standard, for example, is a set of international open standards for digital television maintained by the DVB Project, an industry consortium, and published by a Joint Technical Committee (JTC) of European Telecommunications Standards Institute (ETSI), European Committee for Electrotechnical Standardization (CENELEC) and European Broadcasting Union (EBU). The DVB systems may distribute data by satellite (DVB-S), by cable (DVB-C), by terrestrial television (DVB-T), and by terrestrial television for handhelds (DVB-H). The standards may define the physical layer and data link layer of the communication system. In this regard, the modulation schemes used may differ in accordance to technical and/or physical constraints. For example, DVB-S may utilize QPSK, DVB-C may utilize QAM, and DVB-T and DVB-H may utilize OFDM in the very high frequency (VHF)/ultra high frequency (UHF) spectrum.

These networks may be based on frequency division multiplexing (FDM). The use of FDM systems may result in higher transmission rates by enabling the simultaneous transmission of multiple signals over a single wireline or wireless transmission path. Each of these signals may comprise a carrier frequency modulated by the information to be transmitted. In this regard, the information transmitted in each signal may comprise video, audio, and/or data, for example. The orthogonal FDM (OFDM) spread spectrum technique may be utilized to distribute information over many carriers that are spaced apart at specified frequencies. The OFDM technique may also be referred to as multi-carrier or discrete multi-tone modulation. The spacing between carriers prevents the demodulators in a radio receiver from seeing frequencies other than their own. This technique may result in spectral efficiency and lower multi-path distortion, for example.

In both cellular and OFDM-based networks, the effects of multipath and signal interference may degrade the transmission rate and/or quality of the communication link. In this regard, multiple transmit and/or receive antennas may be utilized to mitigate the effects of multipath and/or signal interference on signal reception and may result in an improved overall system performance. These multi-antenna configurations may also be referred to as smart antenna techniques. It is anticipated that smart antenna techniques may be increasingly utilized both in connection with the deployment of base station infrastructure and mobile subscriber units in cellular systems to address the increasing capacity demands being placed on those systems. These demands arise, in part, from a shift underway from current voice-based services to next-generation wireless multimedia services that provide voice, video, and data communication.

The utilization of multiple transmit and/or receive antennas is designed to introduce a diversity gain and to suppress interference generated within the signal reception process. Such diversity gains improve system performance by increasing received signal-to-noise ratio, by providing more robustness against signal interference, and/or by permitting greater frequency reuse for higher capacity. In communication systems that incorporate multi-antenna receivers, a set of M receive antennas may be utilized to null the effect of (M-1) interferers, for example. Accordingly, N signals may be simultaneously transmitted in the same bandwidth using N transmit antennas, with the transmitted signal then being separated into N respective signals by way of a set of N antennas deployed at the receiver. Systems that utilize multiple transmit and receive antennas may be referred to as multiple-input multiple-output (MIMO) systems. One attractive aspect of multi-antenna systems, in particular MIMO systems, is the significant increase in system capacity that may be achieved by utilizing these transmission configurations. For a fixed overall transmitted power, the capacity offered by a MIMO configuration may scale with the increased signal-to-noise ratio (SNR). For example, in the case of fading multipath channels, a MIMO configuration may increase system capacity by nearly M additional bits/cycle for each 3-dB increase in SNR.

Although existing OFDM radios have gotten more sophisticated over the past few years, their use is generally dictated by the platform in which they are employed. For example, IEEE 802.11 based OFDM radios are typically employed in wireless LAN environments and provide the capability for mobile stations to roam from one access point to another access point within a WLAN. Although the capability provided by ODFM radios to roam from one access point to another access point provides greater mobility than was previous available, this roaming capability is still relatively restrictive in today's integrated network environments. Another drawback with conventional OFDM radios is that they are adapted to process data that is native to the platform in which they operate. In today's integrated network environment, this may limit accessibility to information available within the network.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A method and a system for a reconfigurable orthogonal frequency division multiplexing (OFDM) radio supporting diversity, substantially as shown in and/or described in connections with at least one of the figures, and set forth more completely in the claims.

According to an aspect of the invention, a method for receiving information wirelessly is provided, the method comprising reconfiguring a single OFDM chip to process DVB-H video broadcast signals and at least one of the following: IEEE 802.11 WLAN signals, IEEE 802.16 MAN signals, and cellular signals.

Advantageously, the method further comprises reconfiguring said single OFDM chip based on at least one of the following: frame header information and frame preamble information.

Advantageously, the method further comprises selecting at least one decoding method during said reconfiguring.

Advantageously, the method further comprises selecting a space-time decoding method during said reconfiguring.

Advantageously, the method further comprises selecting at least one modulation type during said reconfiguring.

Advantageously, the method further comprises selecting at least one of the following: a fast Fourier transform algorithm and a discrete Fourier transform algorithm, during said reconfiguring.

Advantageously, the method further comprises selecting an operating bandwidth during said reconfiguring.

Advantageously, the method further comprises selecting a descrambling method during said reconfiguring.

Advantageously, said DVB-H video broadcast signals, said IEEE 802.11 WLAN signals, said IEEE 802.16 MAN signals, and said cellular signals are received signals.

Advantageously, said IEEE 802.11 WLAN signals, said IEEE 802.16 MAN signals, and said cellular signals are transmitted signals.

According to an aspect of the invention, a system for receiving information wirelessly is provided, the system comprising a single OFDM chip comprising circuitry that is reconfigurable to process DVB-H video broadcast signals and at least one of the following: IEEE 802.11 WLAN signals, IEEE 802.16 MAN signals, and cellular signals.

Advantageously, said circuitry within said single OFDM chip reconfigures said single OFDM chip based on at least one of the following: frame header information and frame preamble information.

Advantageously, said circuitry within said single OFDM chip selects at least one decoding method during said reconfiguring.

Advantageously, said circuitry within said single OFDM chip selects a space-time decoding method during said reconfiguring.

Advantageously, said circuitry within said single OFDM chip selects at least one modulation type during said reconfiguring.

Advantageously, said circuitry within said single OFDM chip selects at least one of the following: a fast Fourier transform algorithm and a discrete Fourier transform algorithm, during said reconfiguring.

Advantageously, said circuitry within said single OFDM chip selects an operating bandwidth during said reconfiguring.

Advantageously, said circuitry within said single OFDM chip selects a descrambling method during said reconfiguring.

Advantageously, said DVB-H video broadcast signals, said IEEE 802.11 WLAN signals, said IEEE 802.16 MAN signals, and said cellular signals are received signals.

Advantageously, said IEEE 802.11 WLAN signals, said IEEE 802.16 MAN signals, and said cellular signals are transmitted signals.

According to an aspect of the invention, a machine-readable storage is provided having stored thereon, a computer program having at least one code section for receiving information wirelessly, the at least one code section being executable by a machine for causing the machine to perform steps comprising reconfiguring a single OFDM chip to process DVB-H video broadcast signals and at least one of the following: IEEE 802.11 WLAN signals, IEEE 802.16 MAN signals, and cellular signals.

Advantageously, the machine-readable storage further comprises code for reconfiguring said single OFDM chip based on at least one of the following: frame header information and frame preamble information.

Advantageously, the machine-readable storage further comprises code for selecting at least one decoding method during said reconfiguring.

Advantageously, the machine-readable storage further comprises code for selecting a space-time decoding method during said reconfiguring.

Advantageously, the machine-readable storage further comprises code for selecting at least one modulation type during said reconfiguring.

Advantageously, the machine-readable storage further comprises code for selecting at least one of the following: a fast Fourier transform algorithm and a discrete Fourier transform algorithm, during said reconfiguring.

Advantageously, the machine-readable storage further comprises code for selecting an operating bandwidth during said reconfiguring.

Advantageously, the machine-readable storage further comprises code for selecting a descrambling method during said reconfiguring.

Advantageously, said DVB-H video broadcast signals, said IEEE 802.11 WLAN signals, said IEEE 802.16 MAN signals, and said cellular signals are received signals.

Advantageously, said IEEE 802.11 WLAN signals, said IEEE 802.16 MAN signals, and said cellular signals are transmitted signals.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a block diagram of an exemplary system for providing integrated services between a cellular network, WLAN and a digital video broadcast network, in accordance with an embodiment of the invention.

FIG. 2 is a block diagram of a mobile terminal that is adapted to receive DVB-H broadcasts, IEEE 802.11 communications, IEEE 802.16 communications and/or cellular communications, in accordance with an embodiment of the invention.

FIG. 3 is a block diagram of an exemplary RF integrated circuit (RFIC), in accordance with an embodiment of the invention.

FIG. 4a is a high-level block diagram of an exemplary system for a reconfigurable OFDM radio supporting cellular diversity, in accordance with an embodiment of the invention.

FIG. 4b is a high-level block diagram of an exemplary system for a reconfigurable OFDM radio supporting IEEE 802 diversity, in accordance with an embodiment of the invention.

FIG. 4c is a high-level block diagram of an exemplary system for a reconfigurable OFDM radio supporting DVB-H diversity, in accordance with an embodiment of the invention.

FIG. 4d is a high-level block diagram of an exemplary system for a reconfigurable OFDM radio supporting special case DVB-H diversity, in accordance with an embodiment of the invention.

FIG. 4e is a high-level block diagram of an exemplary system for a reconfigurable OFDM radio supporting special case IEEE 802 diversity, in accordance with an embodiment of the invention.

FIG. 4f is a high-level block diagram of an exemplary system for a reconfigurable OFDM radio supporting IEEE 802 diversity and DVB-H diversity, in accordance with an embodiment of the invention.

FIG. 4g is a high-level block diagram of an exemplary system for a reconfigurable OFDM radio supporting cellular diversity and IEEE 802 diversity, in accordance with an embodiment of the invention.

FIG. 4h is a high-level block diagram of an exemplary system for a reconfigurable OFDM radio supporting cellular diversity, IEEE 802 diversity and DVB-H diversity, in accordance with an embodiment of the invention.

FIG. 4i is a high-level block diagram of an exemplary system for a single chip reconfigurable OFDM radio supporting cellular diversity, IEEE 802 diversity and DVB-H diversity, in accordance with an embodiment of the invention.

FIG. 5 illustrates an exemplary IEEE 802.11 frame, which may be utilized in connection with an embodiment of the invention.

FIG. 6 is a block diagram illustrating an exemplary reconfigurable OFDM chip supporting diversity, in accordance with an embodiment of the invention.

FIG. 7 is a flow chart illustrating exemplary steps for reconfiguring a reconfigurable OFDM radio supporting diversity, in accordance with an embodiment of the invention.

### DETAILED DESCRIPTION OF THE INVENTION

Certain embodiments of the invention may be found in a method and system for a reconfigurable OFDM radio supporting diversity. Aspects of the method may comprise reconfiguring a single OFDM chip to process a received DVB-H video broadcast signal and at least one of an IEEE 802.11 WLAN signal, an IEEE 802.16 MAN signal and a cellular signal. A machine readable storage may include a computer program, having at least one code section that may be executable by a machine, that causes the machine to perform steps for reconfiguring a single OFDM chip as described above.

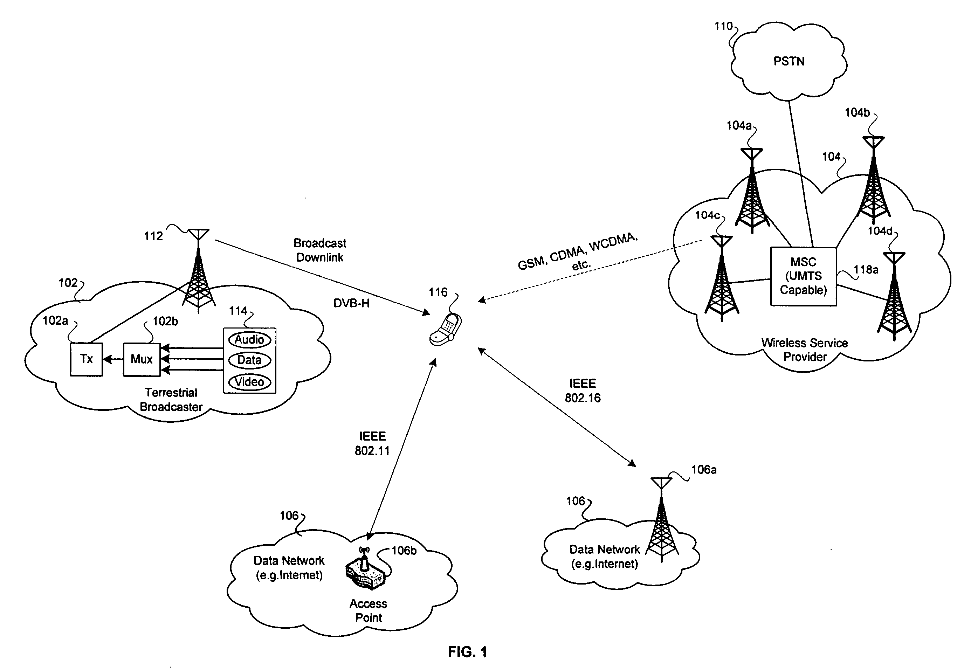

FIG. 1 is a block diagram of an exemplary system for providing integrated services between a cellular network, WLAN and a digital video broadcast network, in accordance with an embodiment of the invention. Referring to FIG. 1, there is shown a terrestrial broadcaster network 102, a wireless service provider network 104, a data network 106, a public switched telephone network 110, and a mobile terminal (MT) 116. The terrestrial broadcaster network 102 may comprise a transmitter (Tx) 102a, a multiplexer (Mux) 102b, and information content source 114. The content source 114 may also be referred to as a data carousel, which may comprise audio, data and video content. The terrestrial broadcaster network 102 may also comprise one or more DVB-H broadcast antennas 112. The wireless service provider network 104 may comprise a mobile switching center (MSC) 118a, and a plurality of cellular base stations 104a, 104b, 104c, and 104d. The data network 106 may comprise one or more broadcast antennas 106a and/or one or more access points 106b.

The terrestrial broadcaster network 102 may comprise suitable equipment that may be adapted to encode and/or encrypt data for transmission via the transmitter 102a. The transmitter 102a in the terrestrial broadcaster network 102 may be adapted to utilize DVB-H broadcast channels to communicate information to the mobile terminal 116. The multiplexer 102b associated with the terrestrial broadcaster network 102 may be utilized to multiplex data from a plurality of sources. For example, the multiplexer 102b may be adapted to multiplex various types of information such as audio, video and/or data into a single pipe for transmission by the transmitter 102a.

The access point (AP) 106b may comprise suitable circuitry, logic and/or code to communicate with the MT 116 in accordance with Institute of Electrical and Electronics Engineers (IEEE) standard 802.11, for example. The AP 106b may be adapted to enable the MT 116 to communicate information via the data network 106 such as the Internet, for example. The AP 106b and the MT 116 may communicate when they are collocated in a proximal area, for example, within a building. The broadcast antenna 106a may be adapted to enable the MT 116 to communicate information to the data network 106 in accordance with the IEEE 802.16 standard, for example. The broadcast antenna 106a and the MT 116 may communicate when they are collocated within a metropolitan area, for example.

The wireless service provider network 104 may be a cellular or personal communication service (PCS) provider. The term cellular as utilized herein refers to both cellular and PCS frequencies bands. Hence, usage of the term cellular may comprise any band of frequencies that may be utilized for cellular communication and/or any band of frequencies that may be utilized for PCS communication. The wireless service provider network 104 may utilize cellular or PCS access technologies such as GSM, CDMA, CDMA2000, WCDMA, AMPS, N-AMPS, and/or TDMA. The cellular network may be utilized to offer bi-directional services via uplink and downlink communication channels. In this regard, other bidirectional communication methodologies comprising uplink and downlink capabilities, whether symmetric or asymmetric, may be utilized.

Although the wireless service provider network 104 is illustrated as a GSM, CDMA, WCDMA based network and/or variants thereof, the invention is not limited in this regard. Accordingly, the wireless service provider network 104 may be an 802.11 based wireless network and/or wireless local area network (WLAN). The wireless service provider network 104 may also be adapted to provide 802.11 based wireless communication in addition to GSM, CDMA, WCDMA, CDMA2000 based network and/or variants thereof. In this case, the mobile terminal 116 may also be compliant with the 802.11 based wireless network.

The public switched telephone network (PSTN) 110 may be coupled to the MSC 118a. Accordingly, the MSC 118a may be adapted to switch calls originating from within the PSTN 110 to one or more mobile terminals serviced by the wireless service provider 104. Similarly, the MSC 118a may be adapted to switch calls originating from mobile terminals serviced by the wireless service provider 104 to one or more telephones serviced by the PSTN 110.

The data network 106 may be, for example, the Internet. The data network 106 may utilize a plurality of technologies related to the communication of information via a data network, such as the Internet protocol (IP), the transmission control protocol (TCP), or the user data protocol (UDP), for example. The data network 106 may not be limited to embodiments in the Internet, and may not be limited to the communication of data. The data network 106 may also be utilized for telephone and/or wireless communications. In this instantiation, the data network 106 may utilize a plurality of technologies related to telephone and/or wireless communications, such as H.323, and/or the session initiation protocol (SIP), for example. The data network may also be utilized to communicate audiovisual and/or multimedia information. The data network may utilize a plurality of technologies related to the communication of audiovisual and/or multimedia communications, such as the real time protocol (RTP), and/or the real time streaming protocol (RTSP), for example.

The information content source 114 may comprise a data carousel. In this regard, the information content source 114 may be adapted to provide various information services, which may comprise online data including audio, video and data content. The information content source 114 may also comprise file download, and software download capabilities.

The mobile terminal (MT) 116 may comprise suitable logic, circuitry and/or code that may be adapted to handle the processing of uplink and downlink cellular channels, WLAN channels and/or DVB-H channels for various access. In an exemplary embodiment of the invention, the mobile terminal 116 may be adapted to utilize one or more cellular access technologies such as GSM, GPRS, EDGE, CDMA, WCDMA, and CDMA2000. The MT 116 may be adapted to utilize one or more wireless data communications access technologies such as, but not limited to, IEEE 802.11, and IEEE 802.16. The MT 116 may also be adapted to receive and process DVB-H broadcast signals in the DVB-H bands.

In an embodiment of the invention, a mobile terminal 116 may be adapted to utilize a single orthogonal frequency division multiplexing (OFDM) integrated circuit that receives and processes DVB-H channels, IEEE 802.11 WLAN channels and/or IEEE 802.16 metropolitan area network (MAN) channels. The mobile terminal 116 may also be adapted to utilize a plurality of cellular integrated circuits for receiving and processing a corresponding plurality of cellular and/or PCS channels. In this regard, the plurality of cellular integrated circuits may be adapted to handle different cellular access technologies. For example, at least one of the cellular integrated circuits may be adapted to handle GSM, and at least one of the cellular integrated circuits may be adapted to handle WCDMA. For broadcast channels, each of the plurality of OFDM integrated circuits may be adapted to handle at least one DVB-H channel, WLAN channel and/or IEEE 802.16 MAN channel.

In another embodiment of the invention, the mobile terminal 116 may be adapted to utilize a single cellular integrated circuit for receiving and processing a plurality of cellular or PCS channels. In this regard, the single cellular integrated circuit may be adapted to handle different cellular access technologies. For example, the cellular integrated circuit may be adapted to handle GSM, and WCDMA. The mobile terminal 116 may utilize a single OFDM integrated circuit that receives and processes DVB-H channels, IEEE 802.11 WLAN channels and/or IEEE 802.16 MAN channels. The mobile terminal 116 may comprise a single memory interface that may be adapted to handle processing of the broadcast communication information, WLAN information, IEEE 802.16 MAN information and processing of cellular communication information. In this regard, the mobile terminal 116 may receive information via a cellular channel, and subsequently transmit the information via a WLAN channel, for example.

In another embodiment of the invention, a mobile terminal may be adapted to utilize a single integrated circuit for receiving and processing broadcast DVB-H channels, IEEE 802.11 WLAN channels and/or IEEE 802.16 MAN channels, and for receiving and processing cellular or PCS channels. In this regard, the single OFDM and cellular integrated circuit may be adapted to handle different cellular access technologies, IEEE 802.11, IEEE 802.16 and/or DVB-H technologies. For example, the single integrated circuit may comprise a plurality of modules each of which may be adapted to receive and process a particular cellular access technology, an IEEE 802.11 WLAN channel, an IEEE 802.16 MAN channel and/or a DVB-H broadcast channel. Accordingly, the single OFDM and cellular integrated circuit may be adapted to handle GSM, and WCDMA, for example. The mobile terminal 116 may comprise a single memory interface that may be adapted to handle processing of the broadcast communication information, WLAN information, IEEE 802.16 MAN information and processing of cellular communication information. In this regard, the mobile terminal 116 may receive information via a cellular channel, and subsequently transmit the information via a WLAN channel, for example.

The MT 116 may communicate with the data network 116, the terrestrial broadcaster network 102 and/or wireless service provider network 104 individually, or simultaneously in any combination. For example, the MT 116 may receive a DVB-H signal from terrestrial broadcaster network 102 while communicating information to the data network 106 via an access point 106b and/or a broadcast antenna 106a. The MT 116 may utilize IEEE 802.11 and/or IEEE 802.16 to communicate with the data network 106. The MT 116 may also utilize DVB-H to communicate with the terrestrial broadcaster network 102. The MT 116 may utilize any of a plurality of PCS access technologies to communicate with the wireless service provider network 104.

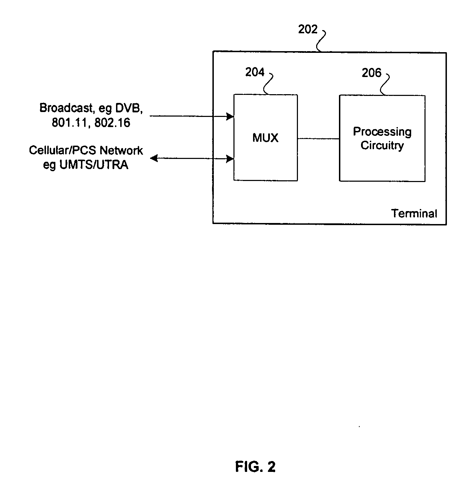

FIG. 2 is a block diagram of a mobile terminal that is adapted to receive DVB-H broadcasts, IEEE 802.11 communications, IEEE 802.16 communications and/or cellular communications, in accordance with an embodiment of the invention. Referring to FIG. 2, there is shown a mobile terminal (MT) 202. The mobile terminal 202 may comprise multiplexer (MUX) 204 and processing circuitry 206.

The multiplexer 204 may comprise suitable logic circuitry and/or code that may be adapted to multiplex incoming signals, which may comprise at least one DVB-H broadcast channel, IEEE 802.11 channel, IEEE 802.16 channel and/or cellular channel. The cellular channel may be within the range of both cellular and PCS frequency bands.

The processing circuitry 206 may comprise, for example, an RF integrated circuit (RFIC) or RF front end (RFFE). In this regard, the processing circuitry 206 may comprise at least one receiver front end (RFE) circuit. A first RFE circuit may be adapted to handle processing of the DVB-H broadcast channel, the IEEE 802.11 channel and/or the IEEE 802.16 channel. A second RFE circuit may be adapted to handle a cellular channel.

The basic function of an RFIC may comprise processing RF and baseband signals at the mobile terminal 202. The tasks performed by an RFIC may comprise, but are not limited to, modulation or demodulation, low pass filtering, and digital to analog (D/A) or analog to digital (A/D) conversion. When receiving an RF signal, the RFIC may demodulate the RF signal to the baseband frequency. Subsequently, the baseband frequency signal may undergo low pass filtering to eliminate sideband artifacts from the demodulation process. Later, the RFIC may perform an A/D conversion before transmitting a digital baseband signal. When receiving a baseband signal, the RFIC may perform a D/A conversion, subsequently modulating the signal to an RF frequency.

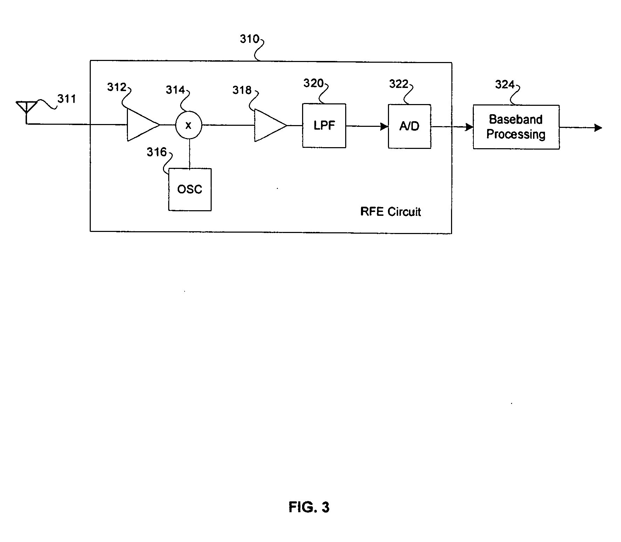

FIG. 3 is a block diagram of an exemplary RF integrated circuit (RFIC), in accordance with an embodiment of the invention. Referring to FIG. 3, there is shown antenna 311, receiver front end (RFE) circuit 310, and baseband processing block 324. The receiver front end (RFE) circuit 310 may comprise a low noise amplifier (LNA) 312, a mixer 314, an oscillator 316, a low noise amplifier or amplifier 318, a low pass filter 320 and an analog-to-digital converter (A/D) 322.

The antenna 311 may be adapted to receive at least one of a plurality of signals. For example, the antenna 311 may be adapted to receive a plurality of signals comprising IEEE 802.11 signals, IEEE 802.16 signals, DVB-H signals and cellular signals, for example.

The receiver front end (RFE) circuit 310 may comprise suitable circuitry, logic and/or code that may be adapted to convert a received RF signal to a baseband signal. An input of the low noise amplifier 312 may be coupled to the antenna 311 so that it may receive RF signals from the antenna 311. The low noise amplifier 312 may comprise suitable logic, circuitry, and/or code that may be adapted to receive an input RF signal, from the antenna 311, and to amplify the input RF signal while limiting the level of additional noise added to the amplified signal as a result of the amplification.

The mixer 314 in the RFE circuit 310 may comprise suitable circuitry and/or logic that may be adapted to mix an output signal, from the low noise amplifier 312, with an oscillator signal, generated by the oscillator 316. The oscillator 316 may comprise suitable circuitry and/or logic that may be adapted to provide a oscillating signal that may be utilized by the mixer 314 to downconvert the output signal, generated from the output of the low noise amplifier 212, from RF down to a baseband frequency. Given a signal from the LNA 212 characterized by a frequency f_{RF}, and a signal from the oscillator 316 characterized by a frequency f_{osc}, the signal generated by the mixer 314 may comprise a plurality of frequency components. Each of the frequency components may be characterized by a frequency. For example, one frequency component may be characterized by a frequency f_{RF}-f_{osc}. This frequency component may represent a baseband frequency. Another frequency component in the signal generated by the mixer 314 may be characterized by a frequency f_{RF}+f_{osc}. This frequency component may represent an upper band frequency.

The low noise amplifier (LNA) or amplifier 318 may comprise suitable circuitry and/or logic that may be adapted to provide low noise amplification of an input signal received from the mixer 314. An output of the low noise amplifier or amplifier 318 may be communicated to the low pass filter 320. The low pass filter block 320 may comprise suitable logic, circuitry and/or code that may be adapted to low pass filter the output signal generated by the LNA or amplifier 318. The low pass filter block 320 may retain a desired signal, for example a baseband signal, and filter out unwanted signal components, such as higher frequency signal components. The unwanted signal components may comprise the upper band frequency component in the signal generated by the mixer 314. The higher frequency signal components may also comprise noise, for example. An output of the low pass filter 320 may be communicated to the analog-digital converter 322 for processing.

The analog-to-digital converter (A/D) 322 may comprise suitable logic circuitry and/or code that may be adapted to convert an analog input signal, for example one received from of the low pass filter 320, to a digital output signal. The analog-to-digital converter 322 may generate a sampled digital representation of the analog input signal that may be communicated to the baseband processing block 324 for subsequent processing. The baseband processing block 324 may comprise suitable logic, circuitry and/or code that may be adapted to process digital baseband signals received from the A/D 322, for example. The subsequent processing performed by the baseband processing block 324 may comprise the inspection of binary bits contained in the digital baseband signals, and extraction of information based on the inspected binary bits. The information may be utilized to adapt parameters utilized by the baseband processing block 324 and/or RFE circuit 310. For example, the extracted information may comprise a modulation type. The modulation type may subsequently be utilized by the A/D 322 and/or baseband processing block 324 when processing subsequent received signals.

Although the A/D 322 is illustrated as being a component in the RFE circuit 310, the invention may not be so limited. Accordingly, the A/D 322 may be a component in the baseband processing block 324. In operation, the RFE circuit 310 may be adapted to receive RF signals via antenna 311 and to convert the received RF signals to a sampled digital representation, which may be communicated to the baseband processing block 324 for subsequent processing.

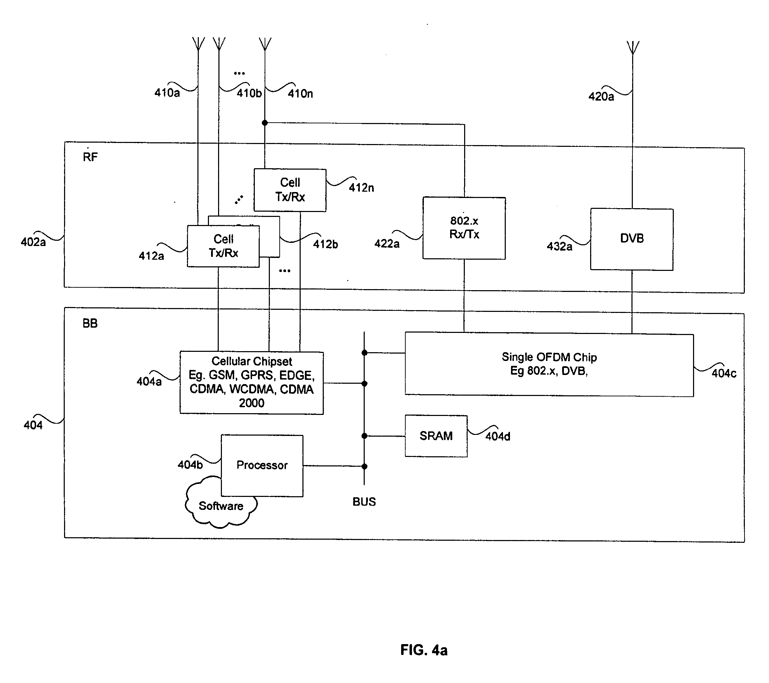

FIG. 4a is a high-level block diagram of an exemplary system for a reconfigurable OFDM radio supporting cellular diversity, in accordance with an embodiment of the invention. Referring to FIG. 4a, there is shown an RFIC 402a, baseband processing circuitry 404, and a plurality of antennas 410a, 410b...410n and 420a. The RFIC 402a may comprise a plurality of RF processing circuits 412a, 412b...412n, 422a and 432a, for example. The RF processing circuits 412a, 412b...412n, 422a and 432a may be integrated into a single integrated circuit (IC) chip. The baseband processing circuitry 404 may comprise a plurality of baseband processing circuits 404a and 404c, a processor 404b, and memory 404d.

The plurality of antennas 410a and 410b...410n may be adapted to receive RF channels comprising a range of frequencies associated with cellular channels. The antenna 410n may also be adapted to receive RF channels comprising a range of frequencies associated with IEEE 802.11 channels and/or IEEE 802.16 channels. The antenna 420a may be adapted to receiving RF channels comprising a range of frequencies associated with DVB-H channels.

The plurality of RF processing circuits 412a and 412b...412n may comprise suitable circuitry, logic and/or code that may be adapted to converting RF signals, received via at least a portion of a plurality of cellular channels, to a corresponding plurality of baseband signals. The plurality of RF processing circuits 412a and 412b...412n may receive RF signals via a corresponding plurality of antennas 410a and 410b...410n. The plurality of RF processing circuits 412a and 412b...412n may also comprise suitable circuitry, logic and/or code that may be adapted to converting a baseband signal to an RF signal that may be subsequently transmitted via a cellular channel. The plurality of RF processing circuits 412a and 412b...412n may transmit an RF signal via at least a portion of a corresponding plurality of antennas 410a and 410b...410n. Each of the plurality of RF processing circuits 412a and 412b...412n may be referred to as a cellular transmitter and receiver.

The RF processing circuit 422a may comprise suitable circuitry, logic and/or code that may be adapted to convert an RF signal, received via an IEEE 802.11 channel and/or IEEE 802.16 channel, to a baseband signal. The RF processing circuit 422a may receive RF signals via antenna 410n. The RF processing circuit 422a may also comprise suitable circuitry, logic and/or code that may be adapted to converting a baseband signal to an RF signal that may be subsequently transmitted via an IEEE 802.11 channel and/or IEEE 802.16 channel. The RF processing circuit 422a may transmit RF signals via antenna 410n. The RF processing circuit 422a may be referred to as an IEEE 802 transmitter and receiver. The RF processing circuit 432a may comprise suitable circuitry, logic and/or code that may be adapted to convert an RF signal, received via a DVB-H channel, to a baseband signal. The RF processing circuit 432a may receive RF signals via antenna 420a. The RF processing circuit 432a may be referred to as a DVB receiver.

The baseband processing circuit 404a may comprise a plurality of IC chips referred to as a chipset. The baseband processing circuit 404a may be referred to as a cellular chipset 404a. The cellular chipset 404a may comprise suitable circuitry, logic and/or code that may be adapted to processing baseband information that was extracted from a cellular signal that may have been received via a wireless service provider network 104. The cellular chipset 404a may support receive diversity techniques when receiving signals from at least a portion of a plurality of cellular transmitters and receivers 412a and 412b...412n, for example. The cellular chipset 404a may support transmit diversity techniques when sending a plurality of signals to at least a portion of a plurality of cellular transmitters and receivers 412a and 412b...412n for subsequent transmission, for example.

An exemplary diversity technique that may be utilized by the cellular chipset 404a for reception is single weight diversity. United States Application Serial No. 11/173,964, United States Application Serial No. 11/173,252, and United States Application Serial No. 11/174,252 provide a detailed description of channel estimation and single weight generation and are hereby incorporated herein by reference in their entirety.

The baseband processing circuit 404c may comprise a single IC chip. The baseband processing circuit 404c may be referred to as an orthogonal frequency division multiplexing (OFDM) chip 404c. The OFDM chip 404c may comprise suitable circuitry, logic and/or code that may be adapted to processing baseband information that was extracted from a signal that may have been received via an IEEE 802.11 channel, an IEEE 802.16 channel and/or DVB-H channel, for example.

The processor 404b may comprise suitable logic, circuitry, and/or code that may be adapted to perform control and/or management operations for the baseband processing circuitry 404. In this regard, the processor 404b may be adapted to generate at least one signal for configuring the OFDM chip 404c. Moreover, the processor 404b may be adapted to arbitrate and/or schedule communications between the cellular chipset 404a and the OFDM chip 404c when collaborative communication is to be utilized. Collaborative communication may be utilized at an MT 116 when information received via a cellular channel corresponds to information received via a DVB-H channel, IEEE 802.11 WLAN channel, and/or an IEEE 802.16 MAN channel, for example. In some instances, the arbitration and/or scheduling operations may be performed by logic, circuitry, and/or code implemented separately from the processor 404b. The processor 404b may be adapted to control parameters that control the diversity selection operations in the cellular chipset 404a. The memory 404d may comprise suitable circuitry, logic and/or code that may be utilized by the processor 404b to store information related to the communication of information via a cellular channel, a DVB-H channel, an IEEE 802.11 WLAN channel and/or a IEEE 802.16 MAN channel, for example.

In operation, at least a portion of the plurality of antennas 410a and 410b...410n may receive a plurality of RF signals via a corresponding plurality of cellular channels. The corresponding plurality of cellular transmitters and receivers 412a and 412b...412n may convert the received RF signal to a corresponding plurality of baseband signals. Based on a receive diversity selection process, the cellular chipset 404a may select one of the received plurality of baseband signals and subsequently process the selected baseband signal. Subsequently, the cellular chipset 404a may cause information that is associated with the selected baseband signal to be stored in the memory 404d. The processor 404b may cause the stored information to be retrieved from the memory 404d. The retrieved information may be utilized to control the processing of subsequent information received, via the plurality of cellular channels, by the plurality of cellular transmitters and receivers 412a and 412b...412n and/or the cellular chipset 404a.

The antenna 410n may also receive an RF signal via an IEEE 802.11 channel or an IEEE 802.16 channel. The IEEE 802 transmitter and receiver 422a may convert the received RF signal to a baseband signal. The OFDM chip 404c may process the baseband signal. The baseband signal may comprise a frame of binary bits. The frame may comprise a plurality of bits. A first portion of the frame may comprise preamble and header information. The subsequent portion of the frame may comprise payload information. The OFDM chip 404c may inspect the header and/or preamble information. Based on information contained in the header and/or preamble, the OFDM chip 404c may cause information that is associated with the received RF signal to be stored in the memory 404d. The processor 404b may cause the stored information to be retrieved from the memory 404d. The retrieved information may be utilized by the processor 404b to configure the OFDM chip 404c. The OFDM chip 404c may subsequently process the payload based on the configuration. The payload may comprise an IEEE 802 frame as specified by an applicable IEEE 802 standard. The retrieved information may also be utilized by the processor 404b to control the processing of subsequent information received, via the IEEE 802.11 channel and/or IEEE 802.16 channel, by the IEEE 802 transmitter and receiver 422a.

The antenna 420a may also receive an RF signal via a DVB-H channel. The DVB-H receiver 432a may convert the received RF signal to a baseband signal. The OFDM chip 404c may process the baseband signal. The baseband signal may comprise a frame of binary bits. The frame may comprise a plurality of bits. A first portion of the frame may comprise preamble and header information. The subsequent portion of the frame may comprise payload information. The OFDM chip 404c may inspect the header and/or preamble information. Based on information contained in the header and/or preamble, the OFDM chip 404c may cause information that is associated with the received RF signal to be stored in the memory 404d. The processor 404b may cause the stored information to be retrieved from the memory 404d. The retrieved information may be utilized by the processor 404b to configure the OFDM chip 404c. The OFDM chip 404c may subsequently process the payload based on the configuration. The payload may comprise a DVB-H frame as specified by an applicable DVB standard and/or European Telecommunications Standards Institute (ETSI) standard. The retrieved information may also be utilized by the processor 404b to control the processing of subsequent information received, via the DVB-H channel, by the DVB receiver 432a.

Based on information stored in the memory 404d, for example, the processor may determine that there is a collaborative communication comprising a signal received via any combination of a cellular channel, IEEE 802.11 channel, IEEE 802.16 channel and/or DVB-H channel. Information from collaborating communication channels may be processed by the processor 404b and/or subsequent processor in accordance with the collaborative nature of the communication. For example, a MT 116 may receive a video broadcast via a terrestrial broadcaster network 102 while the MT 116 is simultaneously communicating via a wireless service provider network 104. Information from the collaborative communication may be presented simultaneously at the MT 116 to a user. For example, the user may be able to utilize the MT 116 to engage in a telephone conversation while also watching an audiovisual broadcast displayed at the MT 116.

In another aspect, collaborative communications may comprise receiving information via one of a cellular channel, IEEE 802.11 channel, IEEE 802.16 channel and/or DVB-H channel, and subsequently transmitting the received information via another of the cellular channel, IEEE 802.11 channel, IEEE 802.16 channel and/or DVB-H channel. This is a form of collaborative communication that may be referred to as transcoding. For example, if the MT 116 receives a signal via a cellular channel, corresponding information stored in the memory 404d may enable the processor 404b to determine that the received information may be subsequently transmitted by the MT 116 via an IEEE 802.11 channel. The processor 404b may transcode the information received via the cellular channel. The transcoded information may be converted into a form that is suitable for transmission via an IEEE 802.11 channel. The transcoded information may be stored in memory 404d. The OFDM chip 404c may subsequently cause the transcoded information to be retrieved from the memory 404d, communicated to the IEEE 802 transmitter and receiver 422a, and transmitted via the IEEE 802.11 channel.

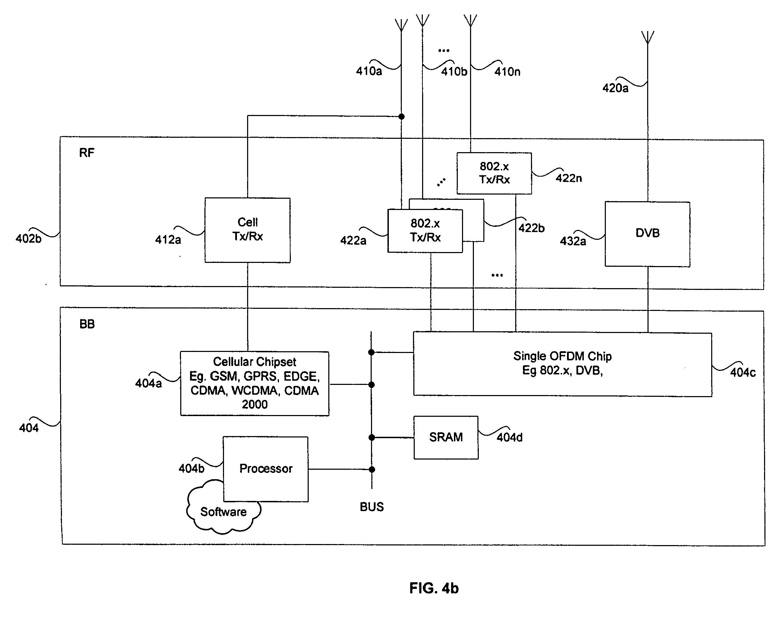

FIG. 4b is a high-level block diagram of an exemplary system for a reconfigurable OFDM radio supporting IEEE 802 diversity, in accordance with an embodiment of the invention. Referring to FIG. 4b, there is shown an RFIC 402b, baseband processing circuitry 404, and a plurality of antennas 410a, 410b...410n and 420a. The RFIC 402b may comprise a plurality of RF processing circuits 412a, 422a, 422b...422n, and 432a, for example. The RF processing circuits 412a, 422a, 422b...422n, and 432a may be integrated into a single integrated circuit (IC) chip. The baseband processing circuitry 404 may comprise a plurality of baseband processing circuits 404a and 404c, a processor 404b, and memory 404d.

The plurality of antennas 410a and 410b...410n may be adapted to receive RF channels comprising a range of frequencies associated with IEEE 802.11 channels and/or IEEE 802.16 channels. The antenna 410a may also be adapted to receive RF channels comprising a range of frequencies associated with cellular channels. The antenna 420a may be adapted to receive RF channels comprising a range of frequencies associated with DVB-H channels.

The RF processing circuit 412a may comprise suitable circuitry, logic and/or code that may be adapted to convert an RF signal, received via a cellular channel, to a baseband signal. The RF processing circuit 412a may receive RF signals via antenna 410a. The RF processing circuit 412a may also comprise suitable circuitry, logic and/or code that may be adapted to convert a baseband signal to an RF signal that may be subsequently transmitted via a cellular channel. The RF processing circuit 412a may transmit RF signals via antenna 410a. The RF processing circuit 412a may be referred to as a cellular transmitter and receiver 412a.

The plurality of RF processing circuits 422a and 422b...422n may comprise suitable circuitry, logic and/or code that may be adapted to convert RF signals, received via at least a portion of a plurality of IEEE 802.11 channels and/or IEEE 802.16 channels, to a corresponding plurality of baseband signals. The plurality of RF processing circuits 422a and 422b...422n may receive RF signals via a corresponding plurality of antennas 410a and 410b...410n. The plurality of RF processing circuits 422a and 422b...422n may also comprise suitable circuitry, logic and/or code that may be adapted to convert a baseband signal to an RF signal that may be subsequently transmitted via an IEEE 802.11 channel and/or IEEE 802.16 channel. The plurality of RF processing circuits 422a and 422b...422n may transmit an RF signal via at least a portion of a corresponding plurality of antennas 410a and 410b...410n. Each of the plurality of RF processing circuits 422a and 422b...422n may be referred to as an IEEE 802 transmitter and receiver. The RF processing circuit 432a may comprise suitable circuitry, logic and/or code that may be adapted to convert an RF signal, received via a DVB-H channel, to a baseband signal. The RF processing circuit 432a may receive RF signals via antenna 420a. The RF processing circuit 432a may be referred to as a DVB receiver 432a.

The baseband processing circuit 404a may be referred to as a cellular chipset 404a. The cellular chipset 404a may comprise suitable circuitry, logic and/or code that may be adapted to processing baseband information that was extracted from a signal received via a wireless service provider network 104, for example. The signal may be associated with a cellular channel.

The baseband processing circuit 404c may be referred to as an OFDM chip 404c. The OFDM chip 404c may comprise suitable circuitry, logic and/or code that may be adapted to processing baseband information that was extracted from a signal that may have been received via an IEEE 802.11 channel, an IEEE 802.16 channel and/or DVB-H channel, for example. The OFDM chip 404c may support receive diversity techniques when receiving signals from at least a portion of a plurality of IEEE 802.11 channels and/or IEEE 802.16 channels, for example. The OFDM chip 404c may support transmit diversity techniques when sending a plurality of signals to at least a portion of a plurality of IEEE 802 transmitters and receivers 422a and 422b...422n for subsequent transmission, for example.

The processor 404b may be adapted to control parameters that direct the diversity selection operations in the OFDM chip 404c.

In operation, at least a portion of the plurality of antennas 410a and 410b...410n may receive a plurality of RF signals via a corresponding plurality of IEEE 802.11 channels and/or IEEE 802.16 channels. The corresponding plurality of IEEE 802 transmitters and receivers 422a and 422b...422n may convert the received RF signal to a corresponding plurality of baseband signals. Based on a receive diversity selection process, the OFDM chip 404c may select one of the received plurality of baseband signals and subsequently process the selected baseband signal. Subsequently, the OFDM chip 404c may cause information that is associated with the selected baseband signal to be stored in the memory 404d. The processor 404b may cause the stored information to be retrieved from the memory 404d. The retrieved information may be utilized to control the processing of subsequent information received, via the plurality of IEEE 802.11 channels and/or IEEE 802.16 channels, by the plurality of IEEE 802 transmitters and receivers 422a and 422b...422n and/or the OFDM chip 404c.

The antenna 410a may also receive an RF signal via a cellular channel. The cellular transmitter and receiver 412a may convert the received RF signal to a baseband signal. The cellular chipset 404a may process the baseband signal. Subsequently the cellular chipset 404a may cause information that is associated with the received RF signal to be stored in the memory 404d. The processor 404b may cause the stored information to be retrieved from the memory 404d. The retrieved information may also be utilized by the processor 404b to control the processing of subsequent information received, via the cellular channel, by the cellular transmitter and receiver 412a.

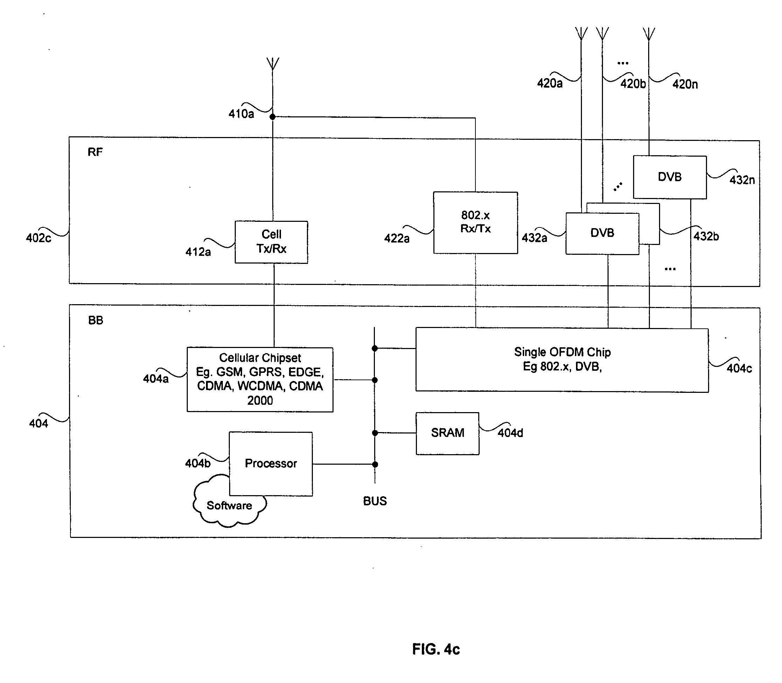

FIG. 4c is a high-level block diagram of an exemplary system for a reconfigurable OFDM radio supporting DVB-H diversity, in accordance with an embodiment of the invention. Referring to FIG. 4c, there is shown an RFIC 402c, baseband processing circuitry 404, and a plurality of antennas 410a and 420a, 420b...420n. The RFIC 402c may comprise a plurality of RF processing circuits 412a, 422a and 432a, 432b...432n, for example. The RF processing circuits 412a, 422a and 432a and 432b...432n may be integrated into a single integrated circuit (IC) chip. The baseband processing circuitry 404 may comprise a plurality of baseband processing circuits 404a and 404c, a processor 404b, and memory 404d.

The plurality of antennas 420a and 420b...420n may be adapted to receive RF channels comprising a range of frequencies associated with DVB-H channels. The antenna 410a may be adapted to receive RF channels comprising a range of frequencies associated with cellular channels and/or IEEE 802.11 channels and/or IEEE 802.16 channels. The RF processing circuit 412a may be referred to as a cellular transmitter and receiver 412a.

The RF processing circuit 422a may comprise suitable circuitry, logic and/or code that may be adapted to convert an RF signal, received via an IEEE 802.11 channel and/or IEEE 802.16 channel, to a baseband signal. The RF processing circuit 422a may receive RF signals via antenna 410a. The RF processing circuit 422a may also comprise suitable circuitry, logic and/or code that may be adapted to convert a baseband signal to an RF signal that may be subsequently transmitted via an IEEE 802.11 channel and/or IEEE 802.16 channel. The RF processing circuit 422a may transmit RF signals via antenna 410a. The RF processing circuit 422a may be referred to as an IEEE 802 transmitter and receiver.

The plurality of RF processing circuits 432a and 432b...432n may comprise suitable circuitry, logic and/or code that may be adapted to convert RF signals, received via at least a portion of a plurality of DVB-H channels, to a corresponding plurality of baseband signals. The plurality of RF processing circuits 432a and 432b...432n may receive RF signals via a corresponding plurality of antennas 420a and 420b...420n. Each of the plurality of RF processing circuits 432a and 432b...432n may be referred to as an DVB-H receiver. The baseband processing circuit 404a may be referred to as a cellular chipset 404a.

The baseband processing circuit 404c may be referred to as an OFDM chip 404c. The OFDM chip 404c may comprise suitable circuitry, logic and/or code that may be adapted to process baseband information that was extracted from a signal that may have been received via an IEEE 802.11 channel, an IEEE 802.16 channel and/or DVB-H channel, for example. The OFDM chip 404c may support receive diversity techniques when receiving signals from at least a portion of a plurality of DVB-H channels, for example. The processor 404b may be adapted to control parameters that direct the diversity selection operations in the OFDM chip 404c.

In operation, at least a portion of the plurality of antennas 420a and 420b...420n may receive a plurality of RF signals via a corresponding plurality of DVB-H channels. The corresponding plurality of DVB-H transmitters and receivers 432a and 432b...432n may convert the received RF signal to a corresponding plurality of baseband signals. Based on a receive diversity selection process, the OFDM chip 404c may select one of the received plurality of baseband signals and subsequently process the selected baseband signal. Subsequently, the OFDM chip 404c may cause information that is associated with the selected baseband signal to be stored in the memory 404d. The processor 404b may cause the stored information to be retrieved from the memory 404d. The retrieved information may be utilized to control the processing of subsequent information received, via the plurality of DVB-H channels, by the plurality of DVB-H transmitters and receivers 432a and 432b...432n and/or the OFDM chip 404c.

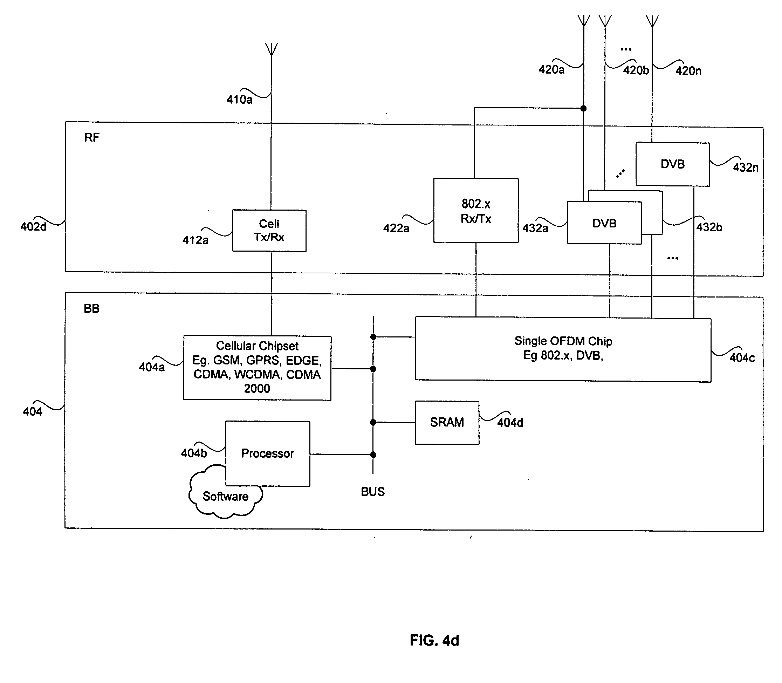

FIG. 4d is a high-level block diagram of an exemplary system for a reconfigurable OFDM radio supporting special case DVB-H diversity, in accordance with an embodiment of the invention. Referring to FIG. 4d, there is shown an RFIC 402d, baseband processing circuitry 404, and a plurality of antennas 410a and 420a, 420b...420n. The RFIC 402d may comprise a plurality of RF processing circuits 412a, 422a and 432a, 432b...432n, for example. The RF processing circuits 412a, 422a and 432a and 432b...432n may be integrated into a single integrated circuit (IC) chip. The baseband processing circuitry 404 may comprise a plurality of baseband processing circuits 404a and 404c, a processor 404b, and memory 404d.

The plurality of antennas 420a and 420b...420n may be adapted to receive RF channels comprising a range of frequencies associated with DVB-H channels. The antenna 420a may also be adapted to receiving RF signals comprising a range of frequencies associated with IEEE 802.11 channels and/or IEEE 802.16 channels. The antenna 410a may be adapted to receive RF channels comprising a range of frequencies associated with cellular. The RF processing circuit 412a may be referred to as a cellular transmitter and receiver 412a.

The RF processing circuit 422a may comprise suitable circuitry, logic and/or code that may be adapted to convert an RF signal, received via an IEEE 802.11 channel and/or IEEE 802.16 channel, to a baseband signal. The RF processing circuit 422a may receive RF signals via antenna 420a. The RF processing circuit 422a may also comprise suitable circuitry, logic and/or code that may be adapted to converting a baseband signal to an RF signal that may be subsequently transmitted via an IEEE 802.11 channel and/or IEEE 802.16 channel. The RF processing circuit 422a may transmit RF signals via antenna 420a. The RF processing circuit 422a may be referred to as an IEEE 802 transmitter and receiver. Each of the plurality of RF processing circuits 432a and 432b...432n may be referred to as an DVB-H receiver. The baseband processing circuit 404a may be referred to as a cellular chipset 404a.

The baseband processing circuit 404c may be referred to as an OFDM chip 404c.

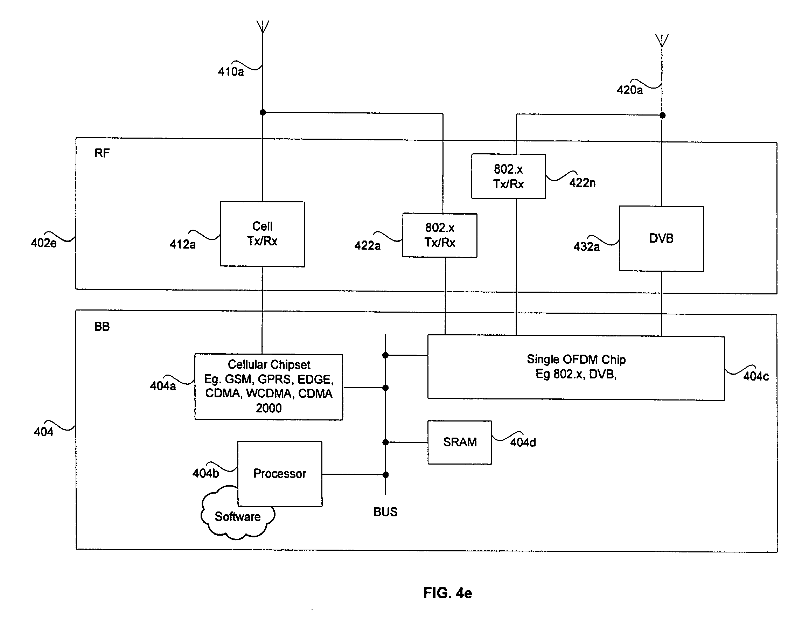

FIG. 4e is a high-level block diagram of an exemplary system for a reconfigurable OFDM radio supporting special case IEEE 802 diversity, in accordance with an embodiment of the invention. Referring to FIG. 4e, there is shown an RFIC 402e, baseband processing circuitry 404, and a plurality of antennas 410a and 420a. The RFIC 402e may comprise a plurality of RF processing circuits 412a, 422a, 422n and 432a, for example. The RF processing circuits 412a, 422a, 422b, 422n, and 432a may be integrated into a single integrated circuit (IC) chip. The baseband processing circuitry 404 may comprise a plurality of baseband processing circuits 404a and 404c, a processor 404b, and memory 404d.

The antenna 410a may be adapted to receive RF channels comprising a range of frequencies associated with IEEE 802.11 channels and/or IEEE 802.16 channels. The antenna 410a may also be adapted to receive RF channels comprising a range of frequencies associated with cellular channels. The antenna 420a may be adapted to receive RF channels comprising a range of frequencies associated with DVB-H channels. The antenna 420a may also be adapted to receive RF channels comprising a range of frequencies associated with IEEE 802.11 channels and/or IEEE 802.16 channels. The RF processing circuit 412a may be referred to as a cellular transmitter and receiver 412a.

The plurality of RF processing circuits 422a and 422n may comprise suitable circuitry, logic and/or code that may be adapted to convert RF signals, received via at least a portion of a plurality of IEEE 802.11 channels and/or IEEE 802.16 channels, to a corresponding plurality of baseband signals. The plurality of RF processing circuits 422a and 422n may receive RF signals via a corresponding plurality of antennas 410a and 420a. The plurality of RF processing circuits 422a and 422n may also comprise suitable circuitry, logic and/or code that may be adapted to convert a baseband signal to an RF signal that may be subsequently transmitted via an IEEE 802.11 channel and/or IEEE 802.16 channel. The plurality of RF processing circuits 422a and 422n may transmit an RF signal via at least a portion of a corresponding plurality of antennas 410a and 420a. Each of the plurality of RF processing circuits 422a and 422n may be referred to as an IEEE 802 transmitter and receiver. The RF processing circuit 432a may comprise suitable circuitry, logic and/or code that may be adapted to converting an RF signal, received via a DVB-H channel, to a baseband signal. The RF processing circuit 432a may receive RF signals via antenna 420a. The RF processing circuit 432a may be referred to as a DVB receiver 432a. The baseband processing circuit 404a may be referred to as a cellular chipset 404a.

The baseband processing circuit 404c may be referred to as an OFDM chip 404c. The OFDM chip 404c may comprise suitable circuitry, logic and/or code that may be adapted to process baseband information that was extracted from a signal that may have been received via an IEEE 802.11 channel, an IEEE 802.16 channel and/or DVB-H channel, for example. The OFDM chip 404c may support receive diversity techniques when receiving signals from at least a portion of a plurality of IEEE 802.11 channels and/or IEEE 802.16 channels, for example. The OFDM chip 404c may support transmit diversity techniques when sending a plurality of signals to at least a portion of a plurality of IEEE 802 transmitters and receivers 422a and 422n for subsequent transmission, for example.

The processor 404b may be adapted to control parameters that direct the diversity selection operations in the OFDM chip 404c.

In operation, at least a portion of the plurality of antennas 410a and 420a may receive a plurality of RF signals via a corresponding plurality of IEEE 802.11 channels and/or IEEE 802.16 channels. The corresponding plurality of IEEE 802 transmitters and receivers 422a and 422n may convert the received RF signals to a corresponding plurality of baseband signals. Based on a receive diversity selection process, the OFDM chip 404c may select one of the received plurality of baseband signals and subsequently process the selected baseband signal. Subsequently, the OFDM chip 404c may cause information that is associated with the selected baseband signal to be stored in the memory 404d. The processor 404b may cause the stored information to be retrieved from the memory 404d. The retrieved information may be utilized to control the processing of subsequent information received, via the plurality of IEEE 802.11 channels and/or IEEE 802.16 channels, by the plurality of IEEE 802 transmitters and receivers 422a and 422n and/or the OFDM chip 404c.

The antenna 420a may also receive an RF signal via a DVB-H channel. The DVB-H receiver 432a may convert the received RF signal to a baseband signal. The OFDM chip 404c may process the baseband signal. Subsequently the OFDM chip 404c may cause information that is associated with the received RF signal to be stored in the memory 404d. The processor 404b may cause the stored information to be retrieved from the memory 404d. The retrieved information may also be utilized by the processor 404b to control the processing of subsequent information received, via the DVB-H channel, by the DVB-H receiver 432a.

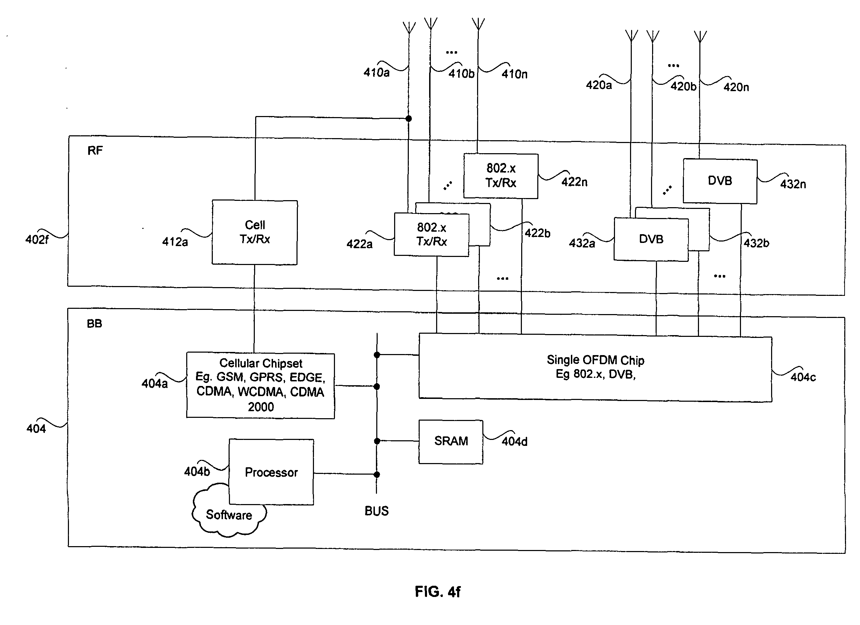

FIG. 4f is a high-level block diagram of an exemplary system for a reconfigurable OFDM radio supporting IEEE 802 diversity and DVB-H diversity, in accordance with an embodiment of the invention. Referring to FIG. 4f, there is shown an RFIC 402f, baseband processing circuitry 404, and a plurality of antennas 410a, 410b...410n, 420a and 420b...420n. The RFIC 402f may comprise a plurality of RF processing circuits 412a, 422a, 422b...422n, 432a and 432b...432n, for example. The RF processing circuits 412a, 422a, 422b...422n, 432a and 432b...432n may be integrated into a single integrated circuit (IC) chip. The baseband processing circuitry 404 may comprise a plurality of baseband processing circuits 404a and 404c, a processor 404b, and memory 404d.

The plurality of antennas 410a and 410b...410n may be adapted to receive RF channels comprising a range of frequencies associated with IEEE 802.11 channels and/or IEEE 802.16 channels. The antenna 410a may also be adapted to receive RF channels comprising a range of frequencies associated with cellular channels. The plurality of antennas 420a and 420b...420n may be adapted to receive RF channels comprising a range of frequencies associated with DVB-H channels. The RF processing circuit 412a may be referred to as a cellular transmitter and receiver 412a.

The plurality of RF processing circuits 422a and 422b...422n may comprise suitable circuitry, logic and/or code that may be adapted to convert RF signals, received via at least a portion of a plurality of IEEE 802.11 channels and/or IEEE 802.16 channels, to a baseband signal. The plurality of RF processing circuits 422a and 422b...422n may receive RF signals via a corresponding plurality of antennas 410a and 410b...410n. The plurality of RF processing circuits 422a and 422b...422n may also comprise suitable circuitry, logic and/or code that may be adapted to convert a baseband signal to an RF signal that may be subsequently transmitted via an IEEE 802.11 channel and/or IEEE 802.16 channel. The plurality of RF processing circuits 422a and 422b...422n may transmit an RF signal via at least a portion of a corresponding plurality of antennas 410a and 410b...410n. Each of the plurality of RF processing circuits 422a and 422b...422n may be referred to as an IEEE 802 transmitter and receiver.

The plurality of RF processing circuits 432a and 432b...432n may comprise suitable circuitry, logic and/or code that may be adapted to convert RF signals, received via at least a portion of a plurality of DVB-H channels, to a corresponding plurality of baseband signals. The plurality of RF processing circuits 432a and 432b...432n may receive RF signals via a corresponding plurality of antennas 420a and 420b...420n. Each of the plurality of RF processing circuits 432a and 432b...432n may be referred to as a DVB-H receiver.

The baseband processing circuit 404c may be referred to as an OFDM chip 404c. The OFDM chip 404c may comprise suitable circuitry, logic and/or code that may be adapted to process baseband information that was extracted from a signal that may have been received via an IEEE 802.11 channel, an IEEE 802.16 channel and/or DVB-H channel, for example. The OFDM chip 404c may support receive diversity techniques when receiving signals from at least a portion of a plurality of IEEE 802.11 channels and/or IEEE 802.16 and/or DVB-H channels, for example. The OFDM chip 404c may support transmit diversity techniques when sending a plurality of signals to at least a portion of a plurality of IEEE 802 transmitters and receivers 422a and 422b...422n for subsequent transmission, for example. The processor 404b may be adapted to control parameters that direct the diversity selection operations in the OFDM chip 404c.

In operation, at least a portion of the plurality of antennas 410a and 410b...410n may receive a plurality of RF signals via a corresponding plurality of IEEE 802.11 channels and/or IEEE 802.16 channels. The corresponding plurality of IEEE 802 transmitters and receivers 422a and 422b...422n may convert the received RF signals to a corresponding plurality of baseband signals. At least a portion of the plurality of antennas 420a and 420b...420n may receive a plurality of RF signals via a corresponding plurality of DVB-H channels. The corresponding plurality of DVB-H receivers 432a and 432b...432n may convert the received RF signals to a corresponding plurality of baseband signals. Based on a receive diversity selection process, the OFDM chip 404c may select one of the received plurality of baseband signals received from IEEE 802 transmitters and receivers 422a and 422b...422n, and/or one of the received plurality of baseband signals received from the DVB-H receivers 432a and 432b...432n. The OFDM chip 404c may subsequently process the selected one or more baseband signals. Subsequently, the OFDM chip 404c may cause information that is associated with the selected baseband signal to be stored in the memory 404d. The processor 404b may cause the stored information to be retrieved from the memory 404d. The retrieved information may be utilized to control the processing of subsequent information received, via the plurality of IEEE 802.11 channels and/or IEEE 802.16 channels, by the plurality of IEEE 802 transmitters and receivers 422a and 422b...422n and/or the OFDM chip 404c. The retrieved information may also be utilized to control the processing of subsequent information received, via the plurality of DVB-H channels, by the plurality of DVB-H receivers 432a and 432b...432n.

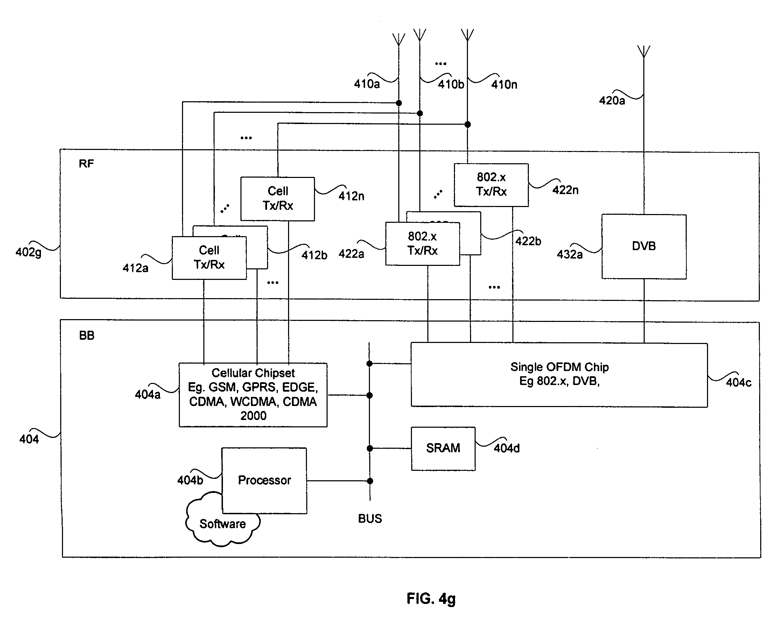

FIG. 4g is a high-level block diagram of an exemplary system for a reconfigurable OFDM radio supporting cellular diversity and IEEE 802 diversity, in accordance with an embodiment of the invention. Referring to FIG. 4g, there is shown an RFIC 402g, baseband processing circuitry 404, and a plurality of antennas 410a, 410b...410n and 420a. The RFIC 402b may comprise a plurality of RF processing circuits 412a, 412b...412n, 422a, 422b...422n, and 432a, for example. The RF processing circuits 412a, 412b...412n, 422a, 422b...422n, and 432a may be integrated into a single integrated circuit (IC) chip. The baseband processing circuitry 404 may comprise a plurality of baseband processing circuits 404a and 404c, a processor 404b, and memory 404d.

The plurality of antennas 410a and 410b...410n may be adapted to receive RF channels comprising a range of frequencies associated with cellular channels and/or IEEE 802.11 channels and/or IEEE 802.16 channels. The antenna 420a may be adapted to receive RF channels comprising a range of frequencies associated with DVB-H channels.

The plurality of RF processing circuits 412a and 412b...412n may comprise suitable circuitry, logic and/or code that may be adapted to convert RF signals, received via at least a portion of a plurality of cellular channels, to a corresponding plurality of baseband signals. The plurality of RF processing circuits 412a and 412b...412n may receive RF signals via a corresponding plurality of antennas 410a and 410b...410n. The plurality of RF processing circuits 412a and 412b...412n may also comprise suitable circuitry, logic and/or code that may be adapted to converting a baseband signal to an RF signal that may be subsequently transmitted via a cellular channel. The plurality of RF processing circuits 412a and 412b...412n may transmit an RF signal via at least a portion of a corresponding plurality of antennas 410a and 410b...410n. Each of the plurality of RF processing circuits 412a and 412b...412n may be referred to as a cellular transmitter and receiver.

The plurality of RF processing circuits 422a and 422b...422n may comprise suitable circuitry, logic and/or code that may be adapted to convert RF signals, received via at least a portion of a plurality of IEEE 802.11 channels and/or IEEE 802.16 channels, to a baseband signal. The plurality of RF processing circuits 422a and 422b...422n may receive RF signals via a corresponding plurality of antennas 410a and 410b...410n. The plurality of RF processing circuits 422a and 422b...422n may also comprise suitable circuitry, logic and/or code that may be adapted to convert a baseband signal to an RF signal that may be subsequently transmitted via an IEEE 802.11 channel and/or IEEE 802.16 channel. The plurality of RF processing circuits 422a and 422b...422n may transmit an RF signal via at least a portion of a corresponding plurality of antennas 410a and 410b...410n. Each of the plurality of RF processing circuits 422a and 422b...422n may be referred to as an IEEE 802 transmitter and receiver. The RF processing circuit 432a may comprise suitable circuitry, logic and/or code that may be adapted to convert an RF signal, received via a DVB-H channel, to a baseband signal. The RF processing circuit 432a may receive RF signals via antenna 420a. The RF processing circuit 432a may be referred to as a DVB receiver 432a.

The baseband processing circuit 404a may be referred to as a cellular chipset 404a. The cellular chipset 404a may comprise suitable circuitry, logic and/or code that may be adapted to process baseband information that was extracted from a signal received via a wireless service provider network 104, for example. The signal may be associated with a cellular channel.

The baseband processing circuit 404c may be referred to as an OFDM chip 404c. The OFDM chip 404c may comprise suitable circuitry, logic and/or code that may be adapted to processing baseband information that was extracted from a signal that may have been received via an IEEE 802.11 channel, an IEEE 802.16 channel and/or DVB-H channel, for example. The OFDM chip 404c may support receive diversity techniques when receiving signals from at least a portion of a plurality of IEEE 802.11 channels and/or IEEE 802.16 channels, for example. The OFDM chip 404c may support transmit diversity techniques when sending a plurality of signals to at least a portion of a plurality of IEEE 802 transmitters and receivers 422a and 422b...422n for subsequent transmission, for example. The processor 404b may be adapted to control parameters that direct the diversity selection operations in the cellular chipset 404a and/or the OFDM chip 404c.

In operation, at least a portion of the plurality of antennas 410a and 410b...410n may receive a plurality of RF signals via a corresponding plurality of cellular channels. The corresponding plurality of cellular transmitters and receivers 412a and 412b...412n may convert the received RF signals to a corresponding plurality of baseband signals. Based on a receive diversity selection process, the cellular chipset 404a may select one of the received plurality of baseband signals and subsequently process the selected baseband signal. Subsequently, the cellular chipset 4040a may cause information that is associated with the selected baseband signal to be stored in the memory 404d. The processor 404b may cause the stored information to be retrieved from the memory 404d. The retrieved information may be utilized to control the processing of subsequent information received, via the plurality of cellular channels, by the plurality of cellular transmitters and receivers 412a and 412b...412n and/or the cellular chipset 404a.

The antenna 420a may also receive an RF signal via a DVB-H channel. The DVB-H receiver 432a may convert the received RF signal to a baseband signal. The OFDM chip 404c may process the baseband signal. Subsequently the OFDM chip 404c may cause information that is associated with the received RF signal to be stored in the memory 404d. The processor 404b may cause the stored information to be retrieved from the memory 404d. The retrieved information may also be utilized by the processor 404b to control the processing of subsequent information received, via the DVB-H channel, by the DVB-H receiver 432a.

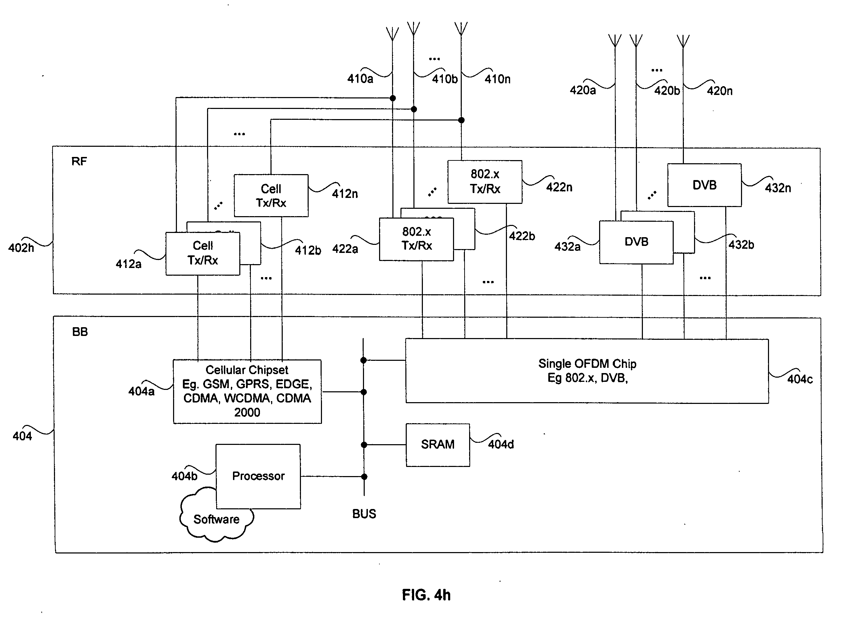

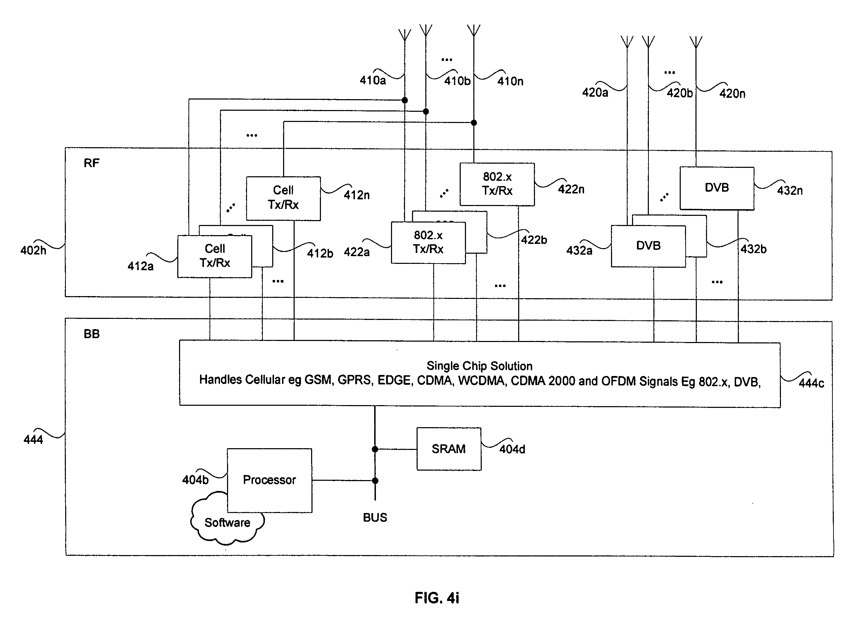

FIG. 4h is a high-level block diagram of an exemplary system for a reconfigurable OFDM radio supporting cellular diversity, IEEE 802 diversity and DVB-H diversity, in accordance with an embodiment of the invention. Referring to FIG. 4h, there is shown an RFIC 402h, baseband processing circuitry 404, and a plurality of antennas 410a, 410b...410n, 420a and 420b...420n. The RFIC 402h may comprise a plurality of RF processing circuits 412a, 412b...412n, 422a, 422b...422n, 432a and 432b...432n, for example. The RF processing circuits 412a, 412b...412n, 422a, 422b...422n, 432a and 432b...432n may be integrated into a single integrated circuit (IC) chip. The baseband processing circuitry 404 may comprise a plurality of baseband processing circuits 404a and 404c, a processor 404b, and memory 404d.

The plurality of antennas 410a and 410b...410n may be adapted to receive RF channels comprising a range of frequencies associated with cellular channels and/or IEEE 802.11 channels and/or IEEE 802.16 channels. The plurality of antennas 420a and 420b...420n may be adapted to receiving RF channels comprising a range of frequencies associated with DVB-H channels. The RF processing circuit 412a may be referred to as a cellular transmitter and receiver 412a.

The plurality of RF processing circuits 412a and 412b...412n may comprise suitable circuitry, logic and/or code that may be adapted to convert RF signals, received via at least a portion of a plurality of cellular channels, to a corresponding plurality of baseband signals. The plurality of RF processing circuits 412a and 412b...412n may receive RF signals via a corresponding plurality of antennas 410a and 410b...410n. The plurality of RF processing circuits 412a and 412b...412n may also comprise suitable circuitry, logic and/or code that may be adapted to convert a baseband signal to an RF signal that may be subsequently transmitted via one or more cellular channels. The plurality of RF processing circuits 412a and 412b...412n may transmit an RF signal via at least a portion of a corresponding plurality of antennas 410a and 410b...410n. Each of the plurality of RF processing circuits 412a and 412b...412n may be referred to as a cellular transmitter and receiver.

The plurality of RF processing circuits 422a and 422b...422n may comprise suitable circuitry, logic and/or code that may be adapted to convert RF signals, received via at least a portion of a plurality of IEEE 802.11 channels and/or IEEE 802.16 channels, to a baseband signal. The plurality of RF processing circuits 422a and 422b...422n may receive RF signals via a corresponding plurality of antennas 410a and 410b...410n. The plurality of RF processing circuits 422a and 422b...422n may also comprise suitable circuitry, logic and/or code that may be adapted to convert a baseband signal to an RF signal that may be subsequently transmitted via an IEEE 802.11 channel and/or IEEE 802.16 channel. The plurality of RF processing circuits 422a and 422b...422n may transmit an RF signal via at least a portion of a corresponding plurality of antennas 410a and 410b...410n. Each of the plurality of RF processing circuits 422a and 422b...422n may be referred to as an IEEE 802 transmitter and receiver.

The plurality of RF processing circuits 432a and 432b...432n may comprise suitable circuitry, logic and/or code that may be adapted to convert RF signals, received via at least a portion of a plurality of DVB-H channels, to a corresponding plurality of baseband signals. The plurality of RF processing circuits 432a and 432b...432n may receive RF signals via a corresponding plurality of antennas 420a and 420b...420n. Each of the plurality of RF processing circuits 432a and 432b...432n may be referred to as an DVB-H receiver.

The baseband processing circuit 404c may be referred to as an OFDM chip 404c. The OFDM chip 404c may comprise suitable circuitry, logic and/or code that may be adapted to processing baseband information that was extracted from a signal received via an IEEE 802.11 channel, an IEEE 802.16 channel and/or DVB-H channel, for example. The OFDM chip 404c may support receive diversity techniques when receiving signals from at least a portion of a plurality of IEEE 802.11 channels and/or IEEE 802.16 and/or DVB-H channels, for example. The OFDM chip 404c may support transmit diversity techniques when sending a plurality of signals to at least a portion of a plurality of IEEE 802 transmitters and receivers 422a and 422b...422n for subsequent transmission, for example. The processor 404b may be adapted to control parameters that direct the diversity selection operations in the OFDM chip 404c and/or cellular chipset 404a.

In operation, at least a portion of the plurality of antennas 410a and 410b...410n may receive a plurality of RF signals via a corresponding plurality of IEEE 802.11 channels and/or IEEE 802.16 channels. The corresponding plurality of IEEE 802 transmitters and receivers 422a and 422b...422n may convert the received RF signals to a corresponding plurality of baseband signals. At least a portion of the plurality of antennas 420a and 420b...420n may receive a plurality of RF signals via a corresponding plurality of DVB-H channels. The corresponding plurality of DVB-H receivers 432a and 432b...432n may convert the received RF signals to a corresponding plurality of baseband signals. Based on a receive diversity selection process, the OFDM chip 404c may select one of the received plurality of baseband signals received from IEEE 802 transmitters and receivers 422a and 422b...422n, and/or one of the received plurality of baseband signals received from the DVB-H receivers 432a and 432b...432n. The OFDM chip 404c may subsequently process the selected one or more baseband signals. Subsequently, the OFDM chip 404c may cause information that is associated with the selected baseband signal to be stored in the memory 404d. The processor 404b may cause the stored information to be retrieved from the memory 404d. The retrieved information may be utilized to control the processing of subsequent information received, via the plurality of IEEE 802.11 channels and/or IEEE 802.16 channels, by the plurality of IEEE 802 transmitters and receivers 422a and 422b...422n and/or the OFDM chip 404c. The retrieved information may also be utilized to control the processing of subsequent information received, via the plurality of DVB-H channels, by the plurality of DVB-H receivers 432a and 432b...432n.

FIG. 4i is a high-level block diagram of an exemplary system for a single chip reconfigurable OFDM radio supporting cellular diversity, IEEE 802 diversity and DVB-H diversity, in accordance with an embodiment of the invention. Referring to FIG. 4i, there is shown an RFIC 402h, baseband processing circuitry 444, and a plurality of antennas 410a, 410b...410n, 420a and 420b...420n. The RFIC 402h may comprise a plurality of RF processing circuits 412a, 412b...412n, 422a, 422b...422n, 432a and 432b...432n, for example. The RF processing circuits 412a, 412b...412n, 422a, 422b...422n, 432a and 432b...432n may be integrated into a single integrated circuit (IC) chip. The baseband processing circuitry 444 may comprise a baseband processing circuit 444c, a processor 404b, and memory 404d.

The RF processing circuit 412a may be referred to as a cellular transmitter and receiver 412a. Each of the plurality of RF processing circuits 412a and 412b...412n may be referred to as a cellular transmitter and receiver. Each of the plurality of RF processing circuits 422a and 422b...422n may be referred to as an IEEE 802 transmitter and receiver. Each of the plurality of RF processing circuits 432a and 432b...432n may be referred to as an DVB-H receiver.

The baseband processing circuit 444c may be referred to as a cellular and OFDM chip 444c. The cellular and OFDM chip 444c may comprise suitable circuitry, logic and/or code that may be adapted to processing baseband information that was extracted from a signal that may have been received via a cellular channel and/or an IEEE 802.11 channel, and/or an IEEE 802.16 channel and/or a DVB-H channel, for example. The cellular and OFDM chip 444c may support receive diversity techniques when receiving signals from at least a portion of a plurality of cellular channels and/or IEEE 802.11 channels and/or IEEE 802.16 and/or DVB-H channels, for example. The cellular and OFDM chip 444c may support transmit diversity techniques when sending a plurality of signals to at least a portion of a plurality of IEEE 802 transmitters and receivers 422a and 422b...422n for subsequent transmission, for example. The cellular and OFDM chip 444c may support transmit diversity techniques when sending a plurality of signals to at least a portion of a plurality of cellular transmitters and receivers 412a and 412b...412n for subsequent transmission, for example. The processor 404b may be adapted to control parameters that direct the diversity selection operations in the cellular and OFDM chip 444c.

In operation, at least a portion of the plurality of antennas 410a and 410b...410n may receive a plurality of RF signals via a corresponding plurality of IEEE 802.11 channels and/or IEEE 802.16 channels. The corresponding plurality of IEEE 802 transmitters and receivers 422a and 422b...422n may convert the received RF signals to a corresponding plurality of baseband signals. At least a portion of the plurality of antennas 410a and 410b...410n may receive a plurality of RF signals via a corresponding plurality of cellular channels. The corresponding plurality of cellular transmitters and receivers 412a and 412b...412n may convert the received RF signals to a corresponding plurality of baseband signals. At least a portion of the plurality of antennas 420a and 420b...420n may receive a plurality of RF signals via a corresponding plurality of DVB-H channels. The corresponding plurality of DVB-H receivers 432a and 432b...432n may convert the received RF signals to a corresponding plurality of baseband signals. Based on a receive diversity selection process, the cellular and OFDM chip 444c may select one of the received plurality of baseband signals received from IEEE 802 transmitters and receivers 422a and 422b...422n, and/or one of the received plurality of baseband signals received from the cellular transmitters and receivers 412a and 412b...412n, and/or one of the received plurality of baseband signals received from the DVB-H receivers 432a and 432b...432n.

The cellular and OFDM chip 444c may subsequently process the selected one or more baseband signals. Subsequently, the cellular and OFDM chip 444c may cause information that is associated with the selected baseband signal to be stored in the memory 404d. The processor 404b may cause the stored information to be retrieved from the memory 404d. The retrieved information may be utilized to control the processing of subsequent information received, via the plurality of IEEE 802.11 channels and/or IEEE 802.16 channels, by the plurality of IEEE 802 transmitters and receivers 422a and 422b...422n and/or the cellular and OFDM chip 444c. The retrieved information may also be utilized to control the processing of subsequent information received, via the plurality of cellular channels, by the plurality of cellular transmitters and receivers 412a and 412b...412n. The retrieved information may also be utilized to control the processing of subsequent information received, via the plurality of DVB-H channels, by the plurality of DVB-H receivers 432a and 432b...432n.

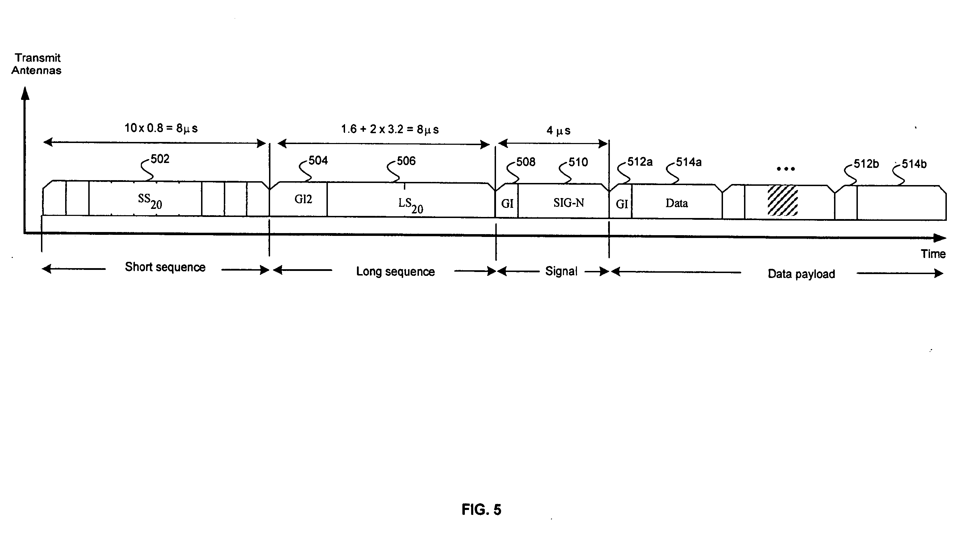

FIG. 5 illustrates an exemplary IEEE 802.11 frame, which may be utilized in connection with an embodiment of the invention. With reference to FIG. 5, there is shown a frame, or physical layer protocol data unit (PPDU), that may comprise a short sequence field 502, a training symbol guard interval (GI2) field 504, a long sequence field 506, a guard interval (GI) field 508, a signal (SIG-N) field 510, a plurality of guard interval fields 512a...512b, and a plurality of data fields 514a...514b. A physical layer service data unit (PSDU) may comprise a header and a data payload. The preamble of the PSDU may comprise a short sequence field 502, and a long sequence field 506. The header portion of the PSDU may comprise the SIG-N field 510. The data payload of the PSDU may comprise the plurality of data fields 514a...514b. A plurality of bits, associated with each of the fields, may be transmitted via an RF channel encoded as a symbol.

The short sequence field 502 may comprise a plurality of short training sequence symbols, for example, 10 short training sequence symbols. Each short training sequence symbol may comprise transmission of information for a defined time interval, for example, 800 nanoseconds (ns). The duration of the short sequence field 502 may comprise a time interval, for example, about 8 microseconds (µs). The short sequence field 502 may be utilized by a receiver, for example, receiver 201, for a plurality of reasons, for example, signal detection, automatic gain control (AGC) for low noise amplification circuitry, diversity selection such as performed by rake receiver circuitry, coarse frequency offset estimation, and timing synchronization.

The training symbol guard interval field 504 may comprise a time interval that separates, in time, receipt or transmission of a subsequent symbol in the PPDU. The duration of the training symbol guard interval field 504 may comprise a time interval, for example, about 1.6 µs. The training symbol guard interval field 504 may be utilized by an MT 116 to reduce the likelihood of inter-symbol interference between a preceding symbol, for example, a symbol transmitted during a short sequence field 502, and a succeeding symbol, for example, a symbol transmitted during a long sequence field 506.

The long sequence field 506 may comprise a plurality of long training symbols, for example, 2 long training symbols. Each long training symbol may comprise transmission of information for a defined time interval, for example, about 3.2 µs. The duration of the long training sequence, including the duration of the long sequence field 506, and the preceding training symbol guard interval field 504, may comprise a time interval of, for example, about 8 µs. The long training sequence field 506 may be utilized by an MT 116 for a plurality of reasons, for example, to perform fine frequency offset estimation, and/or channel estimation.

The guard interval field 508 may comprise a time interval that separates, in time, receipt or transmission of a subsequent symbol in the PPDU. The duration of guard interval field 508 may comprise a time interval, for example, about 800 ns. The guard interval field 508 may be utilized by an MT 116 to reduce the likelihood of inter-symbol interference between a preceding symbol, for example, a symbol transmitted during a long sequence field 506, and a succeeding symbol, for example, a symbol transmitted during the signal SIG-N field 510.

The signal SIG-N field 510 may comprise, for example, a signal symbol. Each signal symbol may comprise transmission of information for a defined time interval, for example, about 3.2 µs. The signal field 510 may be utilized by the MT 116 to implement transmission parameter signaling (TPS). The duration of the single symbol, including the duration of the signal SIG-N field 510, and the preceding guard interval field 508, may comprise a time interval, for example, about 4 µs. The signal SIG-N field 510 may be utilized by the MT 116 to establish a plurality of configuration parameters associated with receipt of a physical layer service data unit (PSDU) via an RF channel.

The guard interval field 512a may comprise a time interval that separates, in time, receipt or transmission of a subsequent symbol in the PPDU. The duration of guard interval field 512a may comprise a time interval, for example, about 800 ns. The guard interval field 512a may be utilized by the MT 116 to reduce the likelihood of inter-symbol interference between a preceding symbol, for example, a symbol transmitted during a signal SIG-N field 510, and a succeeding symbol, for example, a symbol transmitted during a the data field 514a. Each successive guard interval field in the plurality of guard interval fields 512a...512b may be utilized by the MT 116 to reduce the likelihood of inter-symbol interference between a preceding symbol, for example, a symbol transmitted during the plurality of data fields 514a...514b, and a succeeding symbol in the plurality of data fields 514a...514b.

A data field 514a, in the plurality of data fields 514a...514b, may comprise, for example, a data symbol. Each data symbol may comprise transmission, for a defined time interval, for example, about 3.2 µs. The duration of each data interval, including the duration of a data field in the plurality of data fields 514a...514b, and the preceding guard interval field in the plurality of guard interval fields 512a...512b, may comprise a time interval, for example, about 4 µs. The plurality of data fields 514a...514b may be utilized by a receiver, for example, receiver 201, receive information that is contained in a PSDU data payload received via an RF channel.

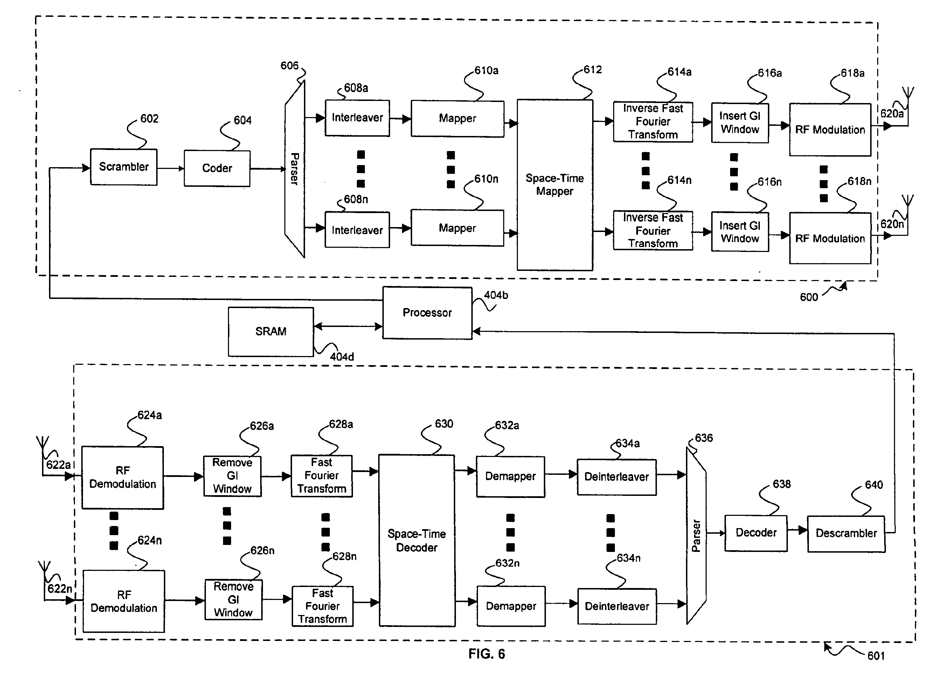

FIG. 6 is a block diagram illustrating an exemplary reconfigurable OFDM chip supporting diversity, in accordance with an embodiment of the invention. With reference to FIG. 6 there is shown a transmitter 600, a receiver 601, a processor 404b, memory 404d, a plurality of transmitting antennas 620a...620n, and a plurality of receiving antennas 622a...622n. The transmitter 600 may comprise a scrambler 602, a coder 604, a parser 606, a plurality of interleaver blocks 608a...608n, a plurality of mapper blocks 610a...610n, a space-time mapper block 612, a plurality of inverse fast Fourier transform (IFFT) blocks 614a...614n, a plurality of insert guard interval (GI) window blocks 616a...616n, and a plurality of RF modulation blocks 618a...618n.

The receiver 601 may comprise a descrambler 640, a decoder 638, a parser 636, a plurality of deinterleaver blocks 634a...634n, a plurality of demapper blocks 632a...632n, a space-time decoder block 630, a plurality of fast Fourier transform (FFT) blocks 628a...628n, a plurality of remove GI window blocks 626a...626n, and a plurality of antenna front end and digital to analog conversion blocks 624a...624n.

In the transmitter 600, the scrambler 602 may comprise suitable circuitry, logic and/or code that may be adapted to scramble a plurality of bits. Scrambling may utilize a scrambling code to introduce randomness into a pattern of bits among the plurality of bits. When transmitted via an RF channel, the received scrambled bits may be characterized by a mean energy level of approximately zero unless descrambled by a corresponding descrambling code. The scrambler 602 may utilize a scrambling algorithm such as Gold codes, for example. The scrambler 602 may be configured to utilize a selected scrambling algorithm.

The coder 604 may comprise suitable circuitry, logic and/or code that may be adapted to generate error detection and/or error correction codes that may be computed based on at least a portion of the bits contained in a frame. The coder 604 may utilize outer codes and/or inner codes. For example, the coder 604 may be adapted to perform Reed-Solomon forward error correction (FEC) code generation. A Reed-Solomon code may be characterized by a tuple (N,K), where N may represent a number of octets containing information from the frame, and K may represent a number of octets containing parity check information. In various embodiments of the invention, the parameter K may be set to a configurable value ranging from K=7 to K=9, for example. For example, the coder 604 may be adapted to perform binary convolutional code (BCC) generation. The coder 604 may be configured to perform BCC based on a coding rate R = ½, for example, where R may indicate a number of redundant bits that may be contained within a given plurality of BCC encoded bits. The value R may be set to a configurable value comprising R=2/3, R=3/4, or R=5/6, for example.

The parser 606 may comprise suitable circuitry, logic and/or code that may be adapted to assigning bits received in a single bit stream to at least one of a plurality of bit streams. The parser 606 may be configured to assign a bit received from a single bit stream to a selected one or more of the plurality of bit streams.

Each of the plurality of interleaver blocks 608a...608n may comprise suitable circuitry, logic and/or code that may be adapted to rearranging the order in which bits appear in a corresponding bit stream. Each of the plurality of interleaver blocks 608a...608n may be configured to perform a specified rearrangement of the order in which bits appear in a corresponding bit stream.

Each of the plurality of mapper blocks 610a...610n may comprise suitable logic, circuitry, and/or code that may be adapted to map one or more received bits to a symbol based on a specified modulation constellation. For example, a mapper may be adapted to perform X-QAM, where X indicates the size of the constellation to be used for quadrature amplitude modulation (QAM). The selection of a value for X may correspond to a modulation type. Each of the plurality of mapper blocks 610a...610n may be configured to select a modulation type that may be utilized for mapping bits to symbols. Examples of modulation types may comprise binary phase shift keying (BPSK), quaternary phase shift keying (QPSK), 16-QAM, or 64-QAM, for example. The mapping performed by a mapper may produce a modulated signal that comprises an in-phase (I) component and a quadrature phase (Q) component, for example. The signal generated by the mapper may comprise a plurality of symbols. Each of the symbols contained in the signal may be referred to as an OFDM symbol. An OFDM symbol may be associated with a plurality of frequency carriers, where a frequency carrier may represent a signal that is transmitted at a given carrier frequency. Each frequency carrier associated with an OFDM symbol may utilize a different carrier frequency. A portion of the bits encoded into the OFDM symbol by the mapper may be associated with one or more of the frequency carriers.

The space-time mapper block 612 may comprise suitable logic, circuitry, and/or code that may be adapted to generate one or more space-time codes based on bits received from a plurality of bit streams. For example, an individual bit stream from the plurality of bit streams may be multiplicatively scaled, utilizing a plurality of current scale factors, to form a corresponding plurality of current space-time codes. The plurality of current space-time codes may be transmitted at about the current time instant by the transmitter 600. At a subsequent time instant, at least a portion of the plurality of received bit streams may be multiplicatively scaled, utilizing a plurality of subsequent scale factors, to form a corresponding plurality of subsequent space-time codes. The plurality of subsequent space-time codes may be transmitted at about the subsequent time instant by the transmitter 600. The space-time mapper 612 may generate space-time codes utilizing a plurality of methods such as space-time block codes (STBC) or space-time trellis codes (STTC), for example. The space-time mapper 612 may be configured to generate space-time codes based on a selected modulation type, for example.

Each of the plurality of inverse FFT (IFFT) blocks 614a...614n may comprise suitable logic, circuitry, and/or code that may be adapted to perform an IFFT or inverse discrete Fourier transform (IDFT) operation on one or more received symbols. An IFFT operation may be characterized by a number of points where the number of points in the IFFT or IDFT implementation may be equal to the number of points associated with a received OFDM symbol, for example. The number of points utilized by an IFFT block may be set to a configurable value ranging from 64 points to 8,192 points, for example. The signal generated by an IFFT block may be referred to as a spatial stream.

Each of the plurality of insert GI window blocks 616a...616n may comprise suitable logic, circuitry and/or code that may be adapted to insert a guard interval 508 into a corresponding spatial stream. The time duration of the guard interval inserted by an insert GI window block may be set to a configurable value ranging from 400ns to 800ns, for example.

Each of the plurality of RF modulation blocks 618a...618n may comprise suitable logic, circuitry, and/or code that may be adapted to modulate a corresponding spatial stream by utilizing a plurality of frequency carriers. The number of frequency carriers utilized may be configurable and may differ in number for a signal transmitted via an IEEE 802.11 channel, an IEEE 802.16 channel, or a DVB-H channel, for example. The frequency spacing between frequency carriers may also vary, for example. In these regards, the operating bandwidth of an RF modulation block may be set to a configurable value ranging from 20MHz and 80Mhz, for example. The frequency carriers may utilize a range of carrier frequencies that differ for a signal transmitted via an IEEE 802.11 channel, an IEEE 802.16 channel, or a DVB-H channel, for example. In this regard, the carrier frequencies utilized by an RF modulation block may be configurable. At least a portion of the plurality of modulated spatial streams generated by a corresponding plurality of RF modulation blocks 618a...618n may be transmitted via a corresponding plurality of antennas 620a...620n, for example.

Each of the plurality of RF demodulation blocks 624a...624n may comprise suitable logic, circuitry, and/or code that may be adapted to demodulate a corresponding signal received via a corresponding plurality of antennas 622a...622n, for example. The operating bandwidth of an RF demodulation block may be set to a configurable value corresponding to the operating bandwidth that was utilized by the corresponding RF modulation block when generating the transmitted signal, for. The demodulation frequencies utilized by an RF demodulation block may be configurable to correspond to the carrier frequencies utilized by the corresponding RF modulation block when generating the transmitted signal, for example.

Each of the plurality of remove GI window blocks 626a...626n may comprise suitable logic, circuitry and/or code that may be adapted to remove a guard interval 508 from a received signal. The time duration of the guard interval removed by a remove GI window block may be set to a configurable value ranging from 400ns to 800ns to correspond to the time interval inserted by the corresponding insert GI window block when generating the transmitted signal, for example.

Each of the plurality of FFT (FFT) blocks 628a...628n may comprise suitable logic, circuitry, and/or code that may be adapted to perform an FFT or discrete Fourier transform (DFT) operation on one or more received symbols. The number of points utilized by an FFT block may be set to a configurable value to correspond to the number of points utilized by the corresponding IFFT block when generating the transmitted signal, for example.

The space-time decoder block 630 may comprise suitable logic, circuitry, and/or code that may be adapted to decode one or more space-time codes in a received one or more signals. The space-time decoder 630 may decode space-time codes utilizing a plurality of methods such as STBC or STTC, for example. The space-time decoder 630 may be configured to decode space-time codes based on a modulation type that was utilized by the transmitter 600 when generating the transmitted signal, for example.

Each of the plurality of demapper blocks 632a...632n may comprise suitable logic, circuitry, and/or code that may be adapted to demap a received symbol into one or more bits based on a specified demodulation constellation. The specified demodulation constellation may be configurable to correspond to the modulation type utilized by the corresponding mapper when generating the transmitted signal, for example. For example, if the corresponding mapper 614a utilized a 16-QAM modulation type, the demapper 632a may utilize a demodulation constellation based on the 16-QAM modulation type.

Each of the plurality of deinterleaver blocks 634a...634n may comprise suitable circuitry, logic and/or code that may be adapted to rearranging the order in which bits appear in a corresponding bit stream. Each of the plurality of deinterleaver blocks 634a...634n may be configured to perform a specified rearrangement of the order in which bits appear in a corresponding bit stream that corresponds to a rearrangement performed by the corresponding interleaver block when generating the transmitted signal, for example.

The parser 636 may comprise suitable circuitry, logic and/or code that may be adapted to integrate a plurality of bits from at least one of a plurality of received bit streams into a single bit stream. The parser 636 may be configured to integrate a plurality of bits from one or more bit streams by utilizing a pattern that corresponds to a pattern utilized by the corresponding parser 606 when generating the transmitted signal, for example.

The decoder 638 may comprise suitable circuitry, logic and/or code that may be adapted to decode error detection and/or error correction codes in a received bit stream. The decoding of the error detection and/or error correction codes may result in the retrieval of the binary information that was encoded by the corresponding coder 604 when generating the transmitted signal. The decoder 638 may be configured to utilize the inner decoding and/or outer decoding algorithm that corresponds to the inner coding and/or outer coding algorithm utilized by the corresponding coder 604 when generating the transmitted signal.

The descrambler 640 may comprise suitable circuitry, logic and/or code that may be adapted to descramble a received plurality of bits. The descrambler 640 may be configured to utilize a descrambling algorithm and/or descrambling code that corresponds to the scrambling algorithm and/or scrambling code utilized by the corresponding scrambler 602 when generating the transmitted signal.

In operation, in the transmitter 600, the processor 404a may determine values for a set of configurable parameters in the OFDM chip 404c based on information retrieved from the memory 404d, in various embodiments of the invention. Software may be utilized to store information in the memory 404d that may be subsequently retrieved by the processor 404a. The processor 404b may configure the scrambler 602 to utilize Gold codes and a specified scrambling code. The processor 404b may configure the coder 604 to utilize Reed-Solomon forward error correction code (FEC) generation with the parity check parameter set to a value K=7, for example. The processor 404b may configure the coder 604 to utilize BCC code generation with the coding rate parameter set to a value R=½, for example.

The processor 404b may configure the parser 606 to utilize a specified pattern for assigning bits from a received single bit stream to a plurality of bit streams. The pattern of assignments of bits from the received single bit stream to each of the plurality of bit streams may be based on the modulation type utilized by at least a porton of the plurality of mapper blocks 610a...610n. The processor 404b may configure each of the plurality of interleavers 608a...608n to rearrange the order of bits in a corresponding one of the received plurality of bit streams. The rearrangement of bits performed by an interleaver may correspond to the modulation type utilized by the corresponding mapper.

The processor 404b may configure at least a portion of the plurality of mapper blocks 610a...610n to utilize the BPSK modulation type, for example. The processor 404b may configure the space-time mapper block 612 to utilize STBC, for example. The processor 404b may configure at least a portion of the plurality of IFFT blocks 614a...614n to utilize a 64-point IFFT algorithm, for example. The processor 404b may configure the insert guard interval window block 616a...616n to insert an 800ns guard band, for example. The processor 404b may configure at least a portion of the RF modulation blocks 618a...618n to utilize a 20MHz operating bandwidth, for example. The transmitter 601 may transmit a frame based on the configured parameters.

Based on information contained in the memory 404d, the processor 404b may determine if a signal is to be transmitted via a cellular channel, an IEEE 802.11 channel, an IEEE 802.16 channel or a DVB-H channel, for example. The processor 404b may transmit a first portion of a frame, for example the header and preamble, utilizing a first set of configurable parameters such as described above, for example. Based on subsequent information retrieved from the memory 404d, the processor 404b may modify at least a portion of the configurable parameters in the OFDM chip 404c. The modified set of parameters may be utilized when transmitting the payload portion of the frame, for example. For example, the processor 404b may reconfigure the mapper 610a to utilize the 64-QAM modulation type when transmitting the payload portion of the frame.

When receiving the header and/or preamble fields, the processor 404b may configure the descrambler 640 to utilize Gold codes and a specified scrambling code. The processor 404b may configure the decoder 638 to utilize Reed-Solomon decoding with the parity check parameter set to a value K=7, for example. The processor 404b may configure the decoder 638 to utilize BCC code generation with the coding rate parameter set to a value R=½, for example. The processor 404b may configure the parser 636 to utilize a specified pattern for integrating bits from a received plurality of bit streams into a single bit stream. The pattern utilized for integrating bits from the received plurality of bit streams into a bit stream may be based on the BPSK modulation type, for example. The processor 404b may configure each of the plurality of deinterleavers 634a...634n to rearrange the order of bits in a corresponding one of the received plurality of bit streams. The rearrangement of bits performed by an interleaver may correspond to the BPSK modulation type, for example.

The processor 404b may configure at least a portion of the plurality of demapper blocks 632a...632n to utilize the BPSK modulation type, for example. The processor 404b may configure the space-time decoder block 630 to utilize STBC, for example. The processor 404b may configure at least a portion of the plurality of FFT blocks 628a...628n to utilize a 64-point FFT algorithm, for example. The processor 404b may configure the remove guard interval window block 626a...626n to insert an 800ns guard band, for example. The processor 404b may configure at least a portion of the RF modulation blocks 624a...624n to utilize a 20MHz operating bandwidth, for example. The receiver 601 may receive a transmitted frame based on the configured parameters.

Based on information contained in the header and/or preamble fields of the frame, the processor 404b may determine if the received signal is from a cellular channel, an IEEE 802.11 channel, an IEEE 802.16 channel or a DVB-H channel, for example. Based on information contained in the header and/or preamble fields, for example TPS information, the processor 404b may modify at least a portion of the configurable parameters in the OFDM chip 404c to receive the payload portion of the frame, for example. For example, the processor 404b may reconfigure a least a portion of the plurality of demapper blocks 632a...632n to utilize the 64-QAM modulation type when receiving the payload portion of the frame.

The processor 404b may send a plurality of bits that may be received by the scrambler 602. The scrambler 602 may scramble the received plurality of bits to generate scrambled bits utilizing Gold codes, for example. The scrambled bits may be received by the coder 604. The coder 604 may apply a Reed-Solomon outer code and a BCC inner code to generate a coded bit stream. The parser 606 may receive the coded bit stream. The parser 606 may assign a first portion of bits from the coded bit stream to a first bit stream, a second portion of bits from the coded bit stream to a second bit stream, and an n^{th} portion of bits from the coded bit stream to an n^{th} bit stream, for example.

The interleaver 608a may receive the first bit stream, and the interleaver 608n may receive the n^{th} bit stream, for example. Each of the plurality of interleavers 608a...608n may rearrange the order of bits from the corresponding received bit stream to generate a corresponding interleaved bit stream. A corresponding interleaved bit stream may be received by a corresponding mapper among the plurality of mappers 610a...610n. The mapper 610a may receive the first interleaved bit stream, for example. Each mapper may organize the bits contained in the corresponding interleaved bit stream into one or more groups of bits where each group of bits may comprise at least a portion of the bits contained in the corresponding interleaved bit stream. Each mapper may map each group of bits to a symbol based on a selected modulation type. The number of bits contained within a group may be determined based on the selected modulation type. For example, when a mapper, such as mapper 610a, utilizes 64-QAM, a group of bits may comprise 6 bits.

The space-time mapper 612 may code symbols received from at least a portion of the plurality of mappers 610a...610n. The space-time mapper 612 may generate a corresponding plurality of space-time coded (STC) symbols. As an illustrative example of STBC coding and decoding, at a current time instant, given symbol c₁ associated with bit stream 1 from mapper 108a, and symbol c₂ associated with bit stream 2 from mapper 108n, and given current scale factors h₁ and h₂, the space-time mapper 612 may generate a signal h₁c₁ that may be transmitted by the transmitting antenna 620a, and a signal h₂c₂ that may be transmitted by the transmitting antenna 620n, for example.

A receiving antenna 622a may receive a signal at about the current time instant x₁ that may be approximately represented as x₁=h_{1*}c₁+h₂*c₂. At the receiving antenna 622a, the signals h₁c₁ and h₂c₂ may be interfering signals that may prevent the receiver 601 from determining the values associated with the individual symbols c₁ and c₂. At a subsequent time instant, the given symbols c₁ and c₂, and given subsequent scale factors -h₁ and h₂, the space-time mapper 612 may generate a signal h_{2*}c₁* that may be transmitted by the transmitting antenna 620a, and a signal -h_{1*}c₂* that may be transmitted by the transmitting antenna 620n. The symbol cᵢ* may represent a complex conjugate version of the symbol cᵢ, where the value of i may be 1 or 2. The receiving antenna 622a may receive a signal at about the current time instant x₂ that may be approximately represented as x₂=-h_{1*}c₂*+h_{2*}c₁*. The space-time decoder 630 may utilize the received values x₁ and x₂ to determine values corresponding to the symbols c₁ and c₂.

At least a portion of the IFFT blocks 614a...614n may perform a frequency domain to time domain transformation on corresponding STC symbols generated by the space-time mapper block 612. The transformation may utilize a 64-point IFFT algorithm, for example. At least a portion of the insert GI window blocks 616a...616n may insert guard intervals as shown in 504, 508 and 512a...512b (FIG. 5), for example. At least a portion of the plurality of RF modulation blocks 618a...618n may modulate the corresponding plurality of spatial streams. The plurality of modulated spatial streams may be transmitted via a corresponding plurality of antennas 620a...620n.

At least a portion of the plurality of RF demodulator blocks 624a...624n may be utilized to receive a plurality of RF signals via a corresponding plurality of antennas 622a...622n. The RF demodulator blocks 624a...624n may demodulate the received plurality of RF signals. At least a portion of the plurality of remove GI window blocks 626a...626n may remove previously inserted guard intervals. The corresponding plurality of FFT blocks 628a...628n may perform a time domain to frequency domain transformation on the corresponding received signals. The space-time decoder block 630 may decode a plurality of received STC symbols. At least a portion of the plurality of demapper blocks 632a...632n may demap a corresponding symbol, from one of a plurality of STC symbols, to a plurality of bits. A demapper block may generate a bit stream. At least a portion of the plurality of deinterleaver blocks 634a...634n may rearrange the order of bits in a received bit stream. The parser 636 may integrate bits received from the one or more deinterleaver blocks 634a...634n to generate a single bit stream, for example. The decoder 638 may decode the single bit stream utilizing decoding based on Reed-Solomon FEC and/or BCC, for example. The descrambler 640 may utilize a Gold code algorithm to apply a descrambler code to the decoded and received bits. The descrambled bits may be sent to the processor 404b. A portion of the bits received by the processor 404b may be stored in memory 404d.

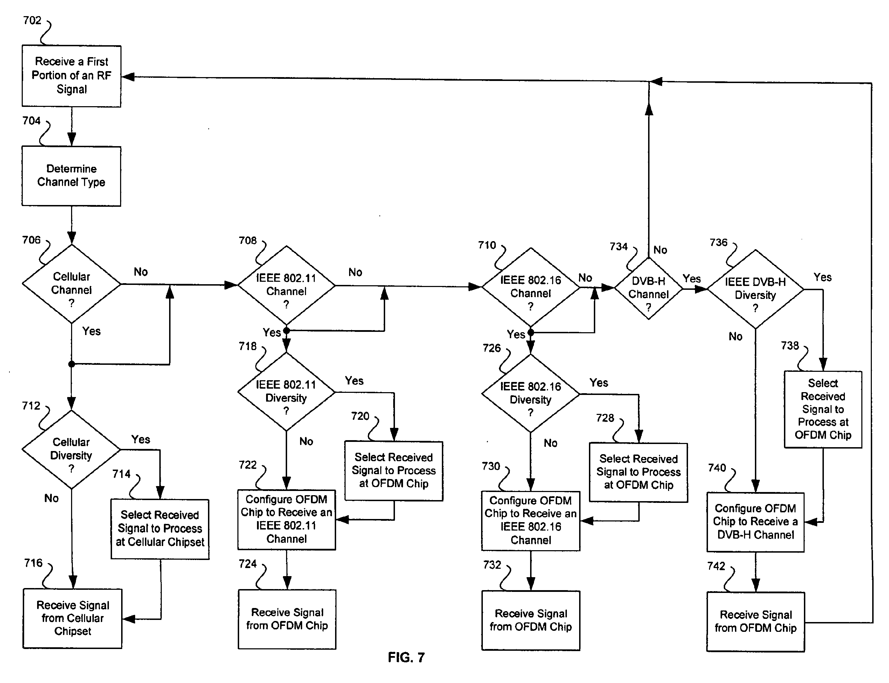

FIG. 7 is a flow chart illustrating exemplary steps for for reconfiguring a reconfigurable OFDM radio supporting diversity, in accordance with an embodiment of the invention. Referring to FIG. 7, in step 702 the MT 116 may receive a first portion of an RF signal. The first portion may comprise at least a portion of preamble and/or header information contained in a frame. In step 704, the MT 116 may determine a channel type that corresponds to the channel from which the RF signal is being received. In step 706, if the channel type determined in step 704 comprises a cellular channel, in step 712, the processor 404b may determine if cellular diversity is supported at the MT 116. Cellular diversity may be supported if the MT 116 may receive a plurality of cellular signals from a plurality of cellular channels received via a plurality of antennas 410a...410n. If cellular diversity is determined in step 712, in step 714, the cellular chipset 404a and/or cellular and OFDM chip 444c may select and process at least one of the received plurality of cellular signals. In step 716, the processor 404b may receive a signal that is processed by the cellular chipset 404a and/or cellular and OFDM chip 444c. If cellular diversity is not determined in step 712, step 716 may follow. To support collaborative communication, step 708 may also follow step 706.

In step 708, if the channel type determined in step 704 comprises an IEEE 802.11 channel, in step 718, the processor 404b may determine if IEEE 802.11 diversity is supported at the MT 116. IEEE 802.11 diversity may be supported if the MT 116 may receive a plurality of IEEE 802.11 signals from a plurality of IEEE 802.11 channels received via a plurality of antennas 410a...410n or 420a...420n. If IEEE 802.11 diversity is determined in step 718, in step 720, the OFDM chip 404c and/or cellular and OFDM chip 444c may select and process at least one of the received plurality of IEEE 802.11 signals. In step 722, the processor 404b may configure the ODFM chip 404c and/or cellular and OFDM chip 444c to receive an IEEE 802.11 signal. In step 724, the processor 404b may receive a signal that is processed by the OFDM chip 404c and/or cellular and OFDM chip 444c. If IEEE 802.11 diversity is not determined in step 718, step 724 may follow. To support collaborative communication, step 710 may also follow step 708.

In step 710, if the channel type determined in step 704 comprises an IEEE 802.16 channel, in step 726, the processor 404b may determine if IEEE 802.16 diversity is supported at the MT 116. IEEE 802.16 diversity may be supported if the MT 116 may receive a plurality of IEEE 802.16 signals from a plurality of IEEE 802.16 channels received via a plurality of antennas 410a...410n or 420a...420n. If IEEE 802.16 diversity is determined in step 726, in step 728, the OFDM chip 404c and/or cellular and OFDM chip 444c may select and process at least one of the received plurality of IEEE 802.16 signals. In step 730, the processor 404b may configure the ODFM chip 404c and/or cellular and OFDM chip 444c to receive an IEEE 802.16 signal. In step 732, the processor 404b may receive a signal that is processed by the OFDM chip 404c and/or cellular and OFDM chip 444c. If IEEE 802.16 diversity is not determined in step 726, step 732 may follow. To support collaborative communication, step 734 may also follow step 710.

In step 734, if the channel type determined in step 704 comprises a DVB-H channel, in step 736, the processor 404b may determine if DVB-H diversity is supported at the MT 116. DVB-H diversity may be supported if the MT 116 may receive a plurality of DVB-H signals from a plurality of DVB-H channels received via a plurality of antennas 420a...420n. If DVB-H diversity is determined in step 736, in step 738, the OFDM chip 404c and/or cellular and OFDM chip 444c may select at least one of the received plurality of DVB-H signals wherein the selected DVB-H signal may be processed. In step 740, the processor 404b may configure the ODFM chip 404c and/or cellular and OFDM chip 444c to receive a DVB-H signal. In step 742, the processor 404b may receive a signal that is processed by the OFDM chip 404c and/or cellular and OFDM chip 444c. Step 702 may follow step 742. If DVB-H diversity is not determined in step 734, step 702 may follow step 734.

Various embodiments of the invention may comprise a system for receiving information wirelessly, the system may comprise a single OFDM chip 404c comprising circuitry that is reconfigurable to process DVB-H video broadcast signals and at least one of the following: IEEE 802.11 WLAN signals, IEEE 802.16 MAN signals, and cellular signals. The OFDM chip 404c may be reconfigured based on frame header information and/or frame preamble information. At least one decoding method may be selected during the reconfiguring. A space-time decoding method may be selected during the reconfiguring. At least one modulation type may be selected during the reconfiguring. An FFT algorithm and/or an DFT algorithm, an operating bandwidth, and/or a descrambling method may be selected during the reconfiguring. The DVB-H video broadcast signals, IEEE 802.11 WLAN signals, IEEE 802.16 MAN signals, and/or cellular signals may be received signals. The IEEE 802.11 WLAN signals, IEEE 802.16 MAN signals, and/or cellular signals may be transmitted signals.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for receiving information wirelessly, the method comprising reconfiguring a single OFDM chip to process DVB-H video broadcast signals and at least one of the following: IEEE 802.11 WLAN signals, IEEE 802.16 MAN signals, and cellular signals.

2. The method according to claim 1, further comprising reconfiguring said single OFDM chip based on at least one of the following: frame header information and frame preamble information.

3. The method according to claim 1, further comprising selecting at least one decoding method during said reconfiguring.

4. The method according to claim 1, further comprising selecting a space-time decoding method during said reconfiguring.

5. The method according to claim 1, further comprising selecting at least one modulation type during said reconfiguring.

6. A system for receiving information wirelessly, the system comprising a single OFDM chip comprising circuitry that is reconfigurable to process DVB-H video broadcast signals and at least one of the following: IEEE 802.11 WLAN signals, IEEE 802.16 MAN signals, and cellular signals.

7. The system according to claim 6, wherein said circuitry within said single OFDM chip reconfigures said single OFDM chip based on at least one of the following: frame header information and frame preamble information.

8. The system according to claim 6, wherein said circuitry within said single OFDM chip selects at least one decoding method during said reconfiguring.

9. The system according to claim 6, wherein said circuitry within said single OFDM chip selects a space-time decoding method during said reconfiguring.

10. A machine-readable storage having stored thereon, a computer program having at least one code section for receiving information wirelessly, the at least one code section being executable by a machine for causing the machine to perform steps comprising reconfiguring a single OFDM chip to process DVB-H video broadcast signals and at least one of the following: IEEE 802.11 WLAN signals, IEEE 802.16 MAN signals, and cellular signals.
